# EUROPEAN PATENT APPLICATION

(11) **EP 4 685 636 A1**
(43) Date of publication of application: **28.01.2026**
(21) Application number: 23930127.8
(22) Date of filing: 25.12.2023
(51) Int. Cl.: G06F 9/455, G06F 9/48, G06F 9/50

(54) **CLOUD SERVICE CONTROL SYSTEM, METHOD, APPARATUS, DEVICE CLUSTER, MEDIUM, AND PRODUCT**

(30) Priority: 27.03.2023 CN 202310308956
(71) Applicant: Huawei Cloud Computing Technologies Co., Ltd., Guiyang, Guizhou 550025 (CN)
(72) Inventor: WANG, Nannan, Guiyang, Guizhou 550025 (CN); WU, Zhizong, Guiyang, Guizhou 550025 (CN); YANG, Changpeng, Guiyang, Guizhou 550025 (CN); WANG, Jun, Guiyang, Guizhou 550025 (CN); BIAN, Shengwei, Guiyang, Guizhou 550025 (CN)
(74) Representative: Körber, Martin Hans
(86) International application number: PCT/CN2023/141586
(87) International publication number: WO 2024/198564

(57) **Abstract**

This disclosure provides a cloud service control system, method, and apparatus, a device cluster, a medium, and a product. In the cloud service control system of this disclosure, a service control apparatus creates a first process fleet and a second process fleet for an application, and configures first processes in the first process fleet and second processes in the second process fleet for clients that access virtual space associated with the application. An interaction processing apparatus processes object information between server virtual machines respectively associated with the first processes in the first process fleet. A content processing apparatus processes content information provided to client virtual machines respectively associated with the second processes in the second process fleet. The service control apparatus controls the clients to access the virtual space via the client virtual machines and the server virtual machines. According to solutions of this disclosure, an application instance is deployed on a cloud server, and independent process fleet management is used, thereby implementing efficient and convenient deployment and running of the application instance.

## Description

This application claims priority to Chinese Patent Application No. 202310308956.7, filed with the China National Intellectual Property Administration on March 27, 2023 and entitled "CLOUD SERVICE CONTROL SYSTEM, METHOD, AND APPARATUS, DEVICE CLUSTER, MEDIUM, AND PRODUCT", which is incorporated herein by reference in its entirety.

### TECHNICAL FIELD

This disclosure generally relates to the field of computer technologies, and in particular, to a cloud service control system, a cloud service control method, a cloud service control apparatus, a computing device cluster, a computer program product, and a computer-readable storage medium.

### BACKGROUND

In recent years, with rapid development of technologies such as virtual reality, augmented reality, and multimedia rendering, there is an enormous growth in application instances of virtual digital activity space like the metaverse (Metaverse). For example, various types of virtual space scenarios that support multi-person interaction, such as a virtual concert, a virtual exhibition, and a virtual conference, are widely applied.

In addition, technologies such as big data and cloud computing are under continuous iteration and optimization, and computing power support and transmission capabilities of cloud services are increasingly improved. The cloud services can provide dynamic, scalable, and virtualized computing and storage resources for application developers and users by using convergence technologies such as distributed computing, parallel computing, utility computing, network storage, virtualization instance, and load balancing.

### SUMMARY

According to some embodiments of this disclosure, a cloud service control system, a cloud service control method, a cloud service control apparatus, a computing device cluster, a computer program product, and a computer-readable storage medium are provided.

According to a first aspect of this disclosure, a cloud service control system is provided. The cloud service control system includes: a service control apparatus, configured to: create a first process fleet and a second process fleet for an application, and configure a first process in the first process fleet and a second process in the second process fleet for a client that accesses virtual space associated with the application; an interaction processing apparatus, configured to process object information from one or more server virtual machines respectively associated with one or more first processes in the first process fleet; and a content processing apparatus, configured to process content information provided to one or more client virtual machines respectively associated with one or more second processes in the second process fleet. The service control apparatus controls the client to access the virtual space via a client virtual machine associated with the first process and a server virtual machine associated with the second process. In the cloud service control system according to this disclosure, an application instance is deployed on a cloud server, and server virtual machines and client virtual machines are managed by using independent process fleets, to implement cloud communication and computing of interaction processing and content processing, thereby implementing efficient and convenient deployment and running of the application instance.

In some embodiments, object information that is associated with the client and that is sent by the client via the client virtual machine is received at the server virtual machine; the server virtual machine sends the object information associated with the client to the interaction processing apparatus; and the interaction processing apparatus determines updated object information for the client based on the object information, and sends the updated object information to the client virtual machine via the server virtual machine. In some embodiments, the client virtual machine sends the updated object information to the content processing apparatus; and the content processing apparatus determines updated content information for the client based on the updated object information, and sends the updated content information to the client. In this way, the interaction processing apparatus can synchronize object information for a plurality of clients and servers that access the virtual space, and the content processing apparatus can generate specific presentation content based on synchronized object information for the clients, so that an application developer can implement large-scale multi-user online virtual space access processing without building a dedicated server.

In some embodiments, the service control apparatus is further configured to: create a first virtual private cloud based on creating the first process fleet; create the one or more server virtual machines for the first virtual private cloud; and start the one or more server virtual machines to establish a connection with the interaction processing apparatus. In some embodiments, the service control apparatus is further configured to: create a second virtual private cloud based on creating the second process fleet; create the one or more client virtual machines for the second virtual private cloud; and start the one or more client virtual machines to establish a connection with the content processing apparatus. In this way, a plurality of server virtual machines and a plurality of client virtual machines are established by using virtual private clouds, so that computing processing for a specific purpose can be implemented, and loosely coupled independent control can be implemented for different functions, thereby flexibly implementing deployment and running of a large-scale multi-user online application instance.

In some embodiments, the service control apparatus is further configured to: create, based on a virtual space creation request, the virtual space associated with the first process fleet; determine, for the first process fleet associated with the virtual space, one or more server virtual machines associated with one or more first process fleets of the first process fleet; and send a virtual space creation response including a network address of the server virtual machine. The client accesses the virtual space by accessing the network address of the server virtual machine via the client virtual machine. In some embodiments, the service control apparatus is further configured to: determine, based on a virtual space access request from the client, the first process fleet and the second process fleet that are associated with the virtual space to be accessed by the client; configure the first process for the client based on the first process fleet, and configure the second process for the client based on the second process fleet; determine the client virtual machine associated with the second process for the second process; and send a virtual space access response including a network address of the client virtual machine to the client. In some embodiments, the client accesses the virtual space by accessing the network address of the client virtual machine and through the network address of the server virtual machine. In this way, a main virtual space processing procedure is implemented on the cloud server, so that a user can implement quick access from a client to the virtual space by performing a simple arrangement on the client, thereby effectively improving user experience.

In some embodiments, the client sends a virtual space disconnection request to the network address of the client virtual machine; and the client virtual machine performs the following operations based on the virtual space disconnection request: disconnecting the client virtual machine from the content processing apparatus; stopping the second process associated with the client virtual machine; and disconnecting the client virtual machine from the server virtual machine associated with the second process configured for the client. In this way, a main part of an access and exit procedure is implemented in the cloud service control system, and access exit of the client can be quickly implemented at the client, thereby further effectively improving user experience.

In some embodiments, the server virtual machines send session statuses of the first processes associated with the server virtual machines to the service control apparatus; the client virtual machines send session statuses of the second processes associated with the client virtual machines to the service control apparatus; the service control apparatus determines, based on the session statuses of the first processes and the session statuses of the second processes, whether all sessions of the first processes in the first process fleet and all sessions of the second processes in the second process fleet are closed; in response to determining that all the sessions of the first processes in the first process fleet are closed, the service control apparatus deletes all the first processes in the first process fleet and all the server virtual machines associated with the first processes; and in response to determining that all the sessions of the second processes in the second process fleet are closed, the service control apparatus deletes all the second processes in the second process fleet and all server virtual machines associated with the second processes. In this way, automatic process management can be implemented based on session statuses proactively reported by virtual machines, and the corresponding virtual machines can be deleted, so that idle resources can be released in time, thereby improving virtual space management efficiency.

In some embodiments, the cloud service control system further includes an application deployment apparatus. The application deployment apparatus is configured to send a request for an application deployment to the service control apparatus in response to application uploading. In some embodiments, the service control apparatus is configured to: in response to receiving the request for the application deployment from the application deployment apparatus, create a client image for creating the second process fleet and a server image for creating the first process fleet, where the application deployment is associated with a third virtual private cloud; configure a peering connection between the first virtual private cloud and the third virtual private cloud based on creating the first virtual private cloud associated with the first process fleet; and configure a peering connection between the second virtual private cloud and the first virtual private cloud based on creating the second virtual private cloud associated with the second process fleet. In this way, efficient communication and connection between the application deployment apparatus serving as a development-side platform of the application developer and the cloud service system can be implemented, without changing an existing development-side platform architecture of the application developer, thereby implementing efficient and convenient development experience.

In some embodiments, the service control apparatus is further configured to execute at least one of the following: adjusting a quantity of startable first processes in the first process fleet in response to a quantity of first processes in the first process fleet meeting a predefined condition; or adjusting a quantity of startable second processes in the second process fleet in response to a quantity of second processes in the second process fleet meeting a predefined condition. In some embodiments, the service control apparatus is further configured to execute at least one of the following: increasing the quantity of startable first processes in the first process fleet in response to the quantity of first processes in the first process fleet being equal to a preset quantity of startable first processes, and decreasing the quantity of startable first processes in the first process fleet in response to the quantity of first processes in the first process fleet being less than a preset threshold for a quantity of started first processes within predefined time; or increasing the quantity of startable second processes in the second process fleet in response to the quantity of second processes in the second process fleet being equal to a preset quantity of startable second processes, and decreasing the quantity of startable second processes in the second process fleet in response to the quantity of second processes in the second process fleet being less than a preset threshold for a quantity of started second processes within predefined time. In this way, a quantity of processes can be flexibly configured, to implement flexible process management, thereby improving resource utilization of a cloud service.

According to a second aspect of this disclosure, a cloud service control method is provided. The cloud service control method includes: creating a first process fleet and a second process fleet for an application, where the first process fleet includes one or more first processes respectively associated with one or more server virtual machines, and the second process fleet includes one or more second processes respectively associated with one or more client virtual machines; and configuring the first process and the second process for a client that accesses virtual space associated with the application, to control the client to access the virtual space via the client virtual machine associated with the first process and the server virtual machine associated with the second process.

In some embodiments, controlling the client to access the virtual space via the client virtual machine and the server virtual machine includes: receiving, at the server virtual machine, object information associated with the client from the client via the client virtual machine; sending, at the server virtual machine, the object information associated with the client to an interaction processing apparatus, where the interaction processing apparatus determines updated object information for the client based on the object information; and receiving, at the client virtual machine, the updated object information from the interaction processing apparatus via the server virtual machine. In some embodiments, controlling the client to access the virtual space via the client virtual machine and the server virtual machine further includes: sending, at the client virtual machine, the updated object information to the content processing apparatus, so that the content processing apparatus determines updated content information for the client based on the updated object information, and sends the updated content information to the client.

In some embodiments, creating the first process fleet includes: creating a first virtual private cloud based on creating the first process fleet; creating the one or more server virtual machines for the first virtual private cloud; and starting the one or more server virtual machines to establish a connection with an interaction processing apparatus, where the interaction processing apparatus is configured to process object information from the one or more server virtual machines. In some embodiments, creating the second process fleet includes: creating a second virtual private cloud based on creating the second process fleet; creating the one or more client virtual machines for the second virtual private cloud; and starting the one or more client virtual machines to establish a connection with a content processing apparatus, where the content processing apparatus is configured to process content information provided to the one or more client virtual machines.

In some embodiments, the cloud service control method further includes: creating, based on a virtual space creation request, the virtual space associated with the first process fleet; determining, for the first process fleet associated with the virtual space, one or more server virtual machines associated with one or more first process fleets of the first process fleet; and sending a virtual space creation response including a network address of the server virtual machine, where the virtual space is provided by accessing the network address of the server virtual machine. In some embodiments, configuring the first process and the second process for the client further includes: determining, based on a virtual space access request from the client, the first process fleet and the second process fleet that are associated with the virtual space to be accessed by the client; configuring the first process for the client based on the first process fleet, and configuring the second process for the client based on the second process fleet; determining the client virtual machine associated with the second process for the second process; and sending a virtual space access response including a network address of the client virtual machine to the client, so that the client accesses the virtual space by accessing the network address of the client virtual machine and through the network address of the server virtual machine.

In some embodiments, the cloud service control method further includes: performing the following operations based on a virtual space disconnection request sent from the client to the network address of the client virtual machine: disconnecting the client virtual machine from the content processing apparatus; stopping the second process associated with the client virtual machine; and disconnecting the client virtual machine from the server virtual machine associated with the second process configured for the client.

In some embodiments, the cloud service control method further includes: determining, based on session statuses of the first processes associated with the server virtual machines and session statuses of the second processes associated with the client virtual machines, whether all sessions of the first processes in the first process fleet and all sessions of the second processes in the second process fleet are closed; in response to determining that all the sessions of the first processes in the first process fleet are closed, deleting all the first processes in the first process fleet and all the server virtual machines associated with the first processes; and in response to determining that all the sessions of the second processes in the second process fleet are closed, deleting all the second processes in the second process fleet and all server virtual machines associated with the second processes.

In some embodiments, the cloud service control method further includes: in response to receiving an application deployment, creating a client image for creating the second process fleet and a server image for creating the first process fleet, where the application deployment is associated with a third virtual private cloud; configuring a peering connection between the first virtual private cloud and the third virtual private cloud based on creating the first virtual private cloud associated with the first process fleet; and configuring a peering connection between the second virtual private cloud and the first virtual private cloud based on creating the second virtual private cloud associated with the second process fleet.

In some embodiments, the cloud service control method further includes at least one of the following: adjusting a quantity of startable first processes in the first process fleet in response to a quantity of first processes in the first process fleet meeting a predefined condition; or adjusting a quantity of startable second processes in the second process fleet in response to a quantity of second processes in the second process fleet meeting a predefined condition. In some embodiments, the cloud service control method further includes at least one of the following: increasing the quantity of startable first processes in the first process fleet in response to the quantity of first processes in the first process fleet being equal to a preset quantity of startable first processes, and decreasing the quantity of startable first processes in the first process fleet in response to the quantity of first processes in the first process fleet being less than a preset threshold for a quantity of started first processes within predefined time; or increasing the quantity of startable second processes in the second process fleet in response to the quantity of second processes in the second process fleet being equal to a preset quantity of startable second processes, and decreasing the quantity of startable second processes in the second process fleet in response to the quantity of second processes in the second process fleet being less than a preset threshold for a quantity of started second processes within predefined time.

According to a third aspect of this disclosure, a cloud service control apparatus is provided. The cloud service control apparatus includes: a first process control module, configured to create a first process fleet, where the first process fleet includes one or more first processes respectively associated with one or more server virtual machines; a second process control module, configured to create a second process fleet, where the second process fleet includes one or more second processes respectively associated with one or more client virtual machines; and a space access control module, configured to configure the first process and the second process for a client that accesses virtual space associated with an application, to control the client to access the virtual space via the client virtual machine associated with the first process and the server virtual machine associated with the second process.

According to a fourth aspect of this disclosure, a computing device cluster is provided. The computing device cluster includes at least one computing device, and each computing device includes a processor and a memory. The processor of the at least one computing device is configured to execute instructions stored in the memory of the at least one computing device, so that the computing device cluster implements the system according to the first aspect of this disclosure. In some embodiments, the computing device cluster includes one computing device. In some other embodiments, the computing device cluster includes a plurality of computing devices. In some embodiments, the computing device may be a server, for example, a central server, an edge server, or a local server in a local data center. In some embodiments, the computing device may alternatively be a terminal device, for example, a desktop computer, a notebook computer, or a smartphone.

According to a fifth aspect of this disclosure, a computing device cluster is provided. The computing device cluster includes at least one computing device, and each computing device includes a processor and a memory. The processor of the at least one computing device is configured to execute instructions stored in the memory of the at least one computing device, so that the computing device cluster performs the method according to the second aspect of this disclosure. In some embodiments, the computing device cluster includes one computing device. In some other embodiments, the computing device cluster includes a plurality of computing devices. In some embodiments, the computing device may be a server, for example, a central server, an edge server, or a local server in a local data center. In some embodiments, the computing device may alternatively be a terminal device, for example, a desktop computer, a notebook computer, or a smartphone.

According to a sixth aspect of this disclosure, a computer program product including instructions is provided. When the instructions are run by a computing device cluster, the computing device cluster is enabled to implement the system according to the first aspect of this disclosure. In some embodiments, the program product may include one or more software installation packages. When the system according to the first aspect or a possible variant thereof needs to be used, the software installation package may be downloaded or copied and executed on a computing device.

According to a seventh aspect of this disclosure, a computer program product including instructions is provided. When the instructions are run by a computing device cluster, the computing device cluster performs the method according to the second aspect of this disclosure. In some embodiments, the program product may include one or more software installation packages. When the method according to the first aspect or a possible variant thereof needs to be used, the software installation package may be downloaded or copied and executed on a computing device.

According to an eighth aspect of this disclosure, a computer-readable storage medium, including computer program instructions, is provided. When the computer program instructions are executed by a computing device cluster, the computing device cluster implements the system according to the first aspect of this disclosure. In some embodiments, the computer-readable storage medium may be non-transient. The computer-readable storage medium includes but is not limited to a volatile memory (for example, a random access memory), a non-volatile memory (for example, a flash memory, a hard disk drive (Hard Disk Drive, HDD), or a solid state drive (Solid State Drive, SSD)).

According to a ninth aspect of this disclosure, a computer-readable storage medium, including computer program instructions, is provided. When the computer program instructions are executed by a computing device cluster, the computing device cluster performs the method according to the second aspect of this disclosure. In some embodiments, the computer-readable storage medium may be non-transient. The computer-readable storage medium includes but is not limited to a volatile memory (for example, a random access memory) and a non-volatile memory (for example, a flash memory, a hard disk drive, or a solid state drive).

It should be understood that the content described in the summary is not intended to limit key or important features of embodiments of this disclosure or limit the scope of this disclosure. Other features of this disclosure will be readily understood through the following description.

### BRIEF DESCRIPTION OF DRAWINGS

With reference to accompanying drawings and the following detailed descriptions, features, advantages, and other aspects of the implementations of this disclosure become more apparent. Several implementations of this disclosure are shown herein by way of example rather than limitation. In the accompanying drawings:
FIG. 1 is an example diagram of a cloud service control system according to an embodiment of this disclosure;
FIG. 2 is a specific example diagram of a cloud service control system according to an embodiment of this disclosure;
FIG. 3A is an example diagram of a service application engine according to an embodiment of this disclosure;
FIG. 3B is an example diagram of an application deployment according to an embodiment of this disclosure;
FIG. 3C is an example diagram of another application deployment according to an embodiment of this disclosure;
FIG. 4A is an example flowchart of a cloud service control method according to an embodiment of this disclosure;
FIG. 4B and FIG. 4C are an example flowchart of process fleet creation in a cloud service control method according to an embodiment of this disclosure;
FIG. 4D is an example flowchart of virtual space creation and access in a cloud service control method according to an embodiment of this disclosure;
FIG. 5A is an example interaction diagram of application deployment and publishing of a cloud service control system according to an embodiment of this disclosure;
FIG. 5B to FIG. 5H are diagrams of user interfaces controlled by an application according to an embodiment of this disclosure;
FIG. 5I is an example diagram of a peering connection according to an embodiment of this disclosure;
FIG. 6 is an example interaction diagram of virtual space creation of a cloud service control system according to an embodiment of this disclosure;
FIG. 7 is an example interaction diagram of a user access procedure of a cloud service control system according to an embodiment of this disclosure;
FIG. 8 is an example interaction diagram of an operation state procedure of a cloud service control system according to an embodiment of this disclosure;
FIG. 9A is an example interaction diagram of an access and exit procedure of a cloud service control system according to an embodiment of this disclosure;
FIG. 9B is an example interaction diagram of a session destruction procedure of a cloud service control system according to an embodiment of this disclosure;
FIG. 10 is a block diagram of a cloud service control apparatus according to some embodiments of this disclosure;
FIG. 11 is a block diagram of an example device that may be used to implement an example implementation of this disclosure;
FIG. 12 is a block diagram of an example device cluster that may be used to implement an example implementation of this disclosure; and
FIG. 13 is a block diagram of another example device that may be used to implement an example implementation of this disclosure.

### DESCRIPTION OF EMBODIMENTS

Embodiments of this disclosure are described in more detail in the following with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. The following may further include other explicit and implied definitions.

It should be understood that in the technical solutions provided in embodiments of this application, some repeated parts may not be described again in the following descriptions of specific embodiments, but it should be considered that these specific embodiments are mutually referenced and may be combined.

In an implementation solution of an application instance of conventional virtual digital activity space (referred to as "virtual space" below), a developer of the application instance develops a client application engine, and then a user installs the client application engine on a client of the user, and accesses the virtual space via the client application engine on the client and a server of the developer, to implement access of the user to the virtual space.

However, the inventors of this disclosure note that, as functions of the application instance in the virtual digital activity space become richer, requirements for storage space and transmission bandwidths of the application instance increase. As a result, it is inconvenient for downloading, installing, and real-time transmission of the client of the user, and not conducive to maintenance of the server of the developer, and higher bandwidth costs are required. For example, a size of an installation package of a conventional application instance reaches more than 100 MB, which is not suitable for timely installation and use of a user, and cannot meet a lightweight requirement. For another example, because an application instance has a trend of requiring high-definition high-bandwidth transmission with high picture quality and a high frame rate, merely a transmission standard (for example, resolution of 480P or 720P, 20 fps to 30 fps, and a downlink bandwidth of 2 Mbps) for a live streaming application cannot meet a high-definition requirement (for example, resolution of 1080P, 30 fps to 60 fps, and a downlink bandwidth of 6 Mbps to 12 Mbps). In addition, the inventors of this disclosure further note that, due to dynamic interaction requirements of a large number of concurrent users, a conventional application instance can only allow hundreds of users to access separate virtual space simultaneously, but cannot support large-scale simultaneous access and interaction of more than 10,000 users. Therefore, the inventors of this disclosure further consider an application instance construction solution to support virtual space by using a cloud service, to implement lightweight, high-definition, and large-scale parallelization of the application instance.

Therefore, an embodiment of this disclosure provides a cloud service control solution. The cloud service control solution in this disclosure may include a service control apparatus, an interaction processing apparatus, and a content processing apparatus. The service control apparatus creates a first process fleet and a second process fleet for an application, and configures a first process in the first process fleet and a second process in the second process fleet for a client that accesses virtual space associated with the application. The interaction processing apparatus processes object information between server virtual machines respectively associated with first processes in the first process fleet. The content processing apparatus processes content information provided to client virtual machines respectively associated with second processes in the second process fleet. Therefore, the service control apparatus controls the client to access the virtual space via the client virtual machines and the server virtual machines. According to the solution of this disclosure, an application instance is deployed on a cloud server, and the server virtual machines and the client virtual machines are managed by using the independent process fleets, to implement cloud communication and computing of interaction processing and content processing, thereby implementing efficient and convenient deployment and running of the application instance.

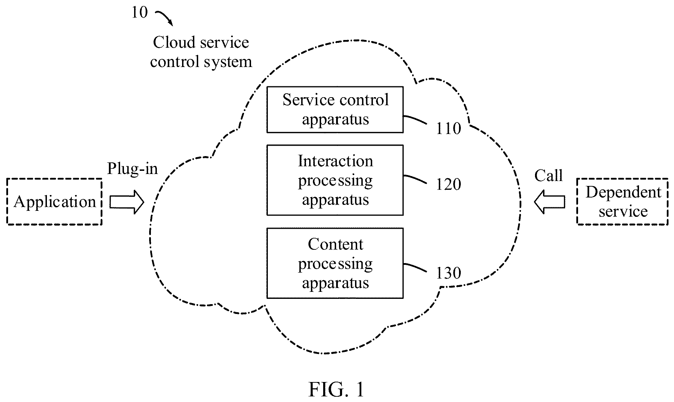

FIG. 1 is an example diagram of a cloud service control system according to an embodiment of this disclosure. As shown in FIG. 1, the cloud service control system 10 in this disclosure includes a service control apparatus 110, an interaction processing apparatus 120, and a content processing apparatus 130. In this embodiment of this disclosure, for example, the service control apparatus 110 may provide services such as application deployment, application process management, virtual machine creation and control, and session creation and control. In some embodiments, the service control apparatus 110 may be deployed based on a distributed cloud server, or may be deployed based on an edge device, or may be deployed based on both a distributed cloud server and an edge device. In some embodiments, the service control apparatus 110 may be deployed based on factors such as a node distance, computation overheads, and path losses. In some embodiments, for example, the service control apparatus 110 may be presented in a form of a graphical user interface (User Interface, UI), or may be called by an application developer or a client of an application user in a form of an application programming interface (Application Programming Interface, API), or certainly may be implemented in another form. In some embodiments, the server or the client may communicate with the service control apparatus 110 via a plug-in integrated in an application engine of the server or the client. In some embodiments, the plug-in may be implemented in a form of a software development kit (Software Development Kit, SDK).

In this embodiment of this disclosure, for example, the interaction processing apparatus 120 may provide a function of synchronizing object information of a large quantity of users in virtual space to implement real-time interaction, and for example, may process object information (for example, user operation information, user virtual image information, and location and direction information of a user in a virtual instance) input by the user and received from each server or client, to support a large quantity of users to simultaneously access separate virtual space for interaction. In some embodiments, for example, the interaction processing apparatus 120 performs processing such as virtual space management, space optimization scheduling, and all-domain information consolidation and segmentation. In this embodiment of this disclosure, the interaction processing apparatus 120 may support interaction of users in three-dimensional virtual space, or may support interaction of users in a two-dimensional virtual space. In this embodiment of this disclosure, the term "virtual space" means, for example, based on a virtual space environment that can accommodate multiple users for interaction, and, for example, may be implemented based on a three-dimensional modeling technology. In some embodiments, the virtual space may have different types of scenarios, for example, virtual live streaming, virtual exhibition, virtual concert, and cloud online conference. In some embodiments, the virtual space is applicable to the metaverse virtual reality space described above in this disclosure. In some embodiments, the virtual space may implement virtual simulation and city modeling of a digital twin factory, and carry a virtualized component to accommodate the virtual instance of the user. It should be understood that, the definition of the virtual space in this disclosure is not limited thereto, provided that the virtual space is applicable to an independent scope of supporting simultaneous access and online interaction of multiple users. In this embodiment of this disclosure, the term "object information" means, for example, information related to a user, and, for example, may include attribute information of the virtual instance, location and direction information in the virtual space, and related interaction information of the virtual instance of the user. In some embodiments, the object information may further include environment configuration information that supports experience of the virtual instance of the user in the virtual space, for example, a building, vegetation, an animal, or an intelligent robot in the virtual space. In some embodiments, the virtual instance of the user may be, for example, a virtual image of the user, or may be presented in a form of an emulated person, or certainly may be presented in another type of image. It should be understood that the definition of the object information in this disclosure is not limited thereto, provided that the object information is related information that is applicable to the user relative to the virtual space.

In this embodiment of this disclosure, the content processing apparatus 130 may process, for example, content displayed to the user of the client. In some embodiments, the content processing apparatus 130 may perform processing such as media encoding, decoding, and network transmission for an audio, a video, an image, and the like. In this embodiment of this disclosure, the content processing apparatus 130 may be implemented based on a real-time 3D (Real-Time 3D, RT3D) media transmission engine, and certainly, in some embodiments, may also be implemented based on a two-dimensional media technology. In some embodiments, the content processing apparatus 130 may be implemented by one or more physically independent servers, or a logically independent server virtual machine, or any combination thereof. In some embodiments, the content processing apparatus 130 may be alternatively integrated with another apparatus or function and distributed on a plurality of nodes.

In this embodiment of this disclosure, a plurality of application instances may be deployed in the cloud service control system 10, and status signaling or control signaling may be transmitted between the application instances and the cloud service control system 10 via a plug-in. In this embodiment of this disclosure, the application instance may be applicable to various types of application scenarios. The application scenarios may include, for example, digital human courseware production and virtual teacher teaching in the education field, digital human endorsement, digital human presentation, and digital human conference in the government and public utility field, intelligent medical customer service and virtual doctor training in the medical and health field, and digital human intelligent customer service, digital human enterprise endorsement, and digital human training video production in the financial field, intelligent customer service, digital human guide, and digital human presentation in the culture and tourism field, virtual variety show hosts, virtual news anchors, and virtual sign language interpreters in the broadcasting, TV, and media field, and digital human entertainment live streaming, digital human short video production, and e-commerce live streaming in the interactive entertainment and e-commerce field. However, an application scenario of this disclosure is not limited thereto, provided that the application scenario is applicable to implementing the method in embodiments of this disclosure. In some embodiments, a digital human may represent a virtual image provided by a user or a developer, and may be presented in any form.

In some embodiments, the cloud service control system 10 may call a dependent service to support processing in the service control apparatus 110, the interaction processing apparatus 120, the content processing apparatus 130, and the like. In some embodiments, the dependent service may include a media native engine for implementing cloud rendering, physical model processing, digital human processing, and the like, a media service for implementing audio/video real-time communication (Real-Time Communication, RTC), real-time simulation and animation (Real-Time Simulation and Animation), and other services such as artificial intelligence model processing.

It should be understood that, in this embodiment of this disclosure, a part or all of components or functions of the cloud service control system 10 may be deployed on one or more nodes in an integrated manner or a distributed manner. This is not limited in this disclosure. Specific implementation may be determined based on a specific design or requirement. In this embodiment of this disclosure, the node may include a server apparatus or a client apparatus that is physically or logically independent, or may include any network element in a transmission network. It should be understood that the node may further include any apparatus that can perform a corresponding method in this disclosure or implement a part of a structure in this disclosure. In some embodiments, correspondingly, quantities or compositions of components or functions of the cloud service control system 10 may also be implemented in any manner, and are not limited by specific embodiments of this disclosure.

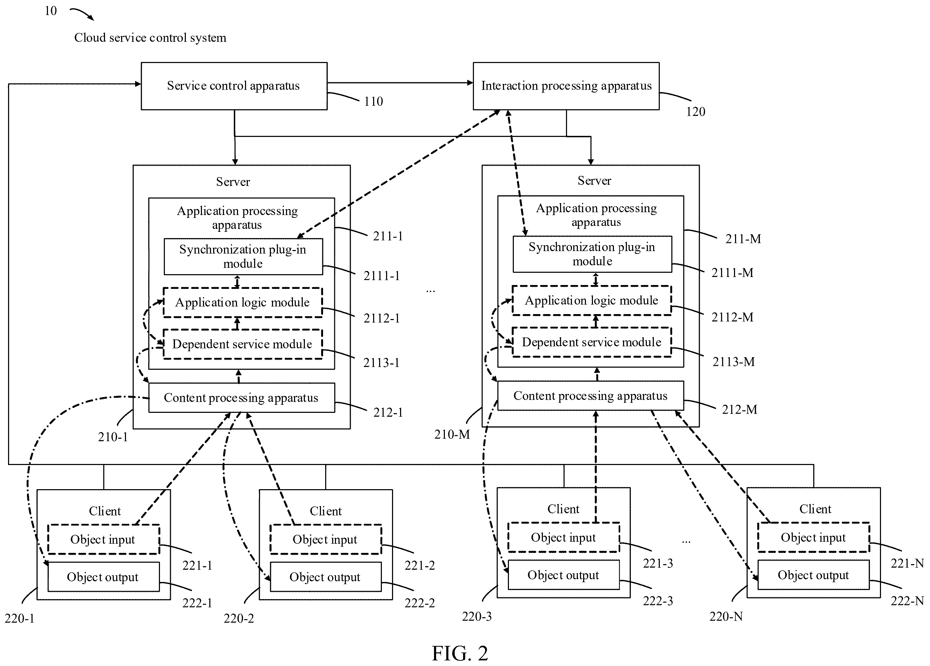

FIG. 2 is a specific example diagram of a cloud service control system according to an embodiment of this disclosure. As shown in FIG. 2, the cloud service control system 10 further includes a plurality of servers 210-1, ..., and 210M (which are sometimes collectively referred to as the "servers 210" below), and a plurality of clients 220-1, ..., and 220-N (which are sometimes collectively referred to as the "clients 220" below) separately connected to each of the plurality of servers. In this embodiment of this disclosure, the server 210 may include application processing apparatuses 211 (for example, application processing apparatuses 211-1, ..., and 211-M, which are collectively referred to as the "application processing apparatuses 211" below) and content processing apparatuses 212 (for example, content processing apparatuses 212-1, ..., and 212-M, which are collectively referred to as "content processing apparatuses 212" below), and the application processing apparatuses 211 includes synchronization plug-in modules 2111 (for example, synchronization plug-in modules 2111-1, ..., and 2111-M, which are collectively referred to as the "synchronization plug-in modules 2111" below), application logic modules 2112 (for example, application logic modules 2112-1, ..., and 2112-M, which are collectively referred to as "application logic modules 2112" below), and dependent service modules 2113 (for example, dependent service modules 2113-1, ..., and 2113-M, which are collectively referred to as the "dependent service modules 2113" below). In this embodiment of this disclosure, the application processing apparatuses 211 may be application engines developed by a developer, and are configured to: provide application instances of virtual space and provide a virtual space service for clients. In this embodiment of this disclosure, the synchronization plug-in modules 2111 may be plug-in modules for communication with a service control apparatus 110, an interaction processing apparatus 120, and the content processing apparatuses 130, or for example, may be implemented in a form of a software development kit (Software Development Kit, SDK). In some embodiments, the synchronization plug-in modules 2111 may mainly include control plane plug-ins for application fleet management and session management, and application plane plug-ins for life cycle management on application processes and sessions and for video stream transmission and communication capabilities. In some embodiments, the synchronization plug-in modules 2111 may communicate with the service control apparatus 110, to implement process control for client virtual machines or server virtual machines. In some embodiments, the synchronization plug-in modules 2111 may communicate with the interaction processing apparatus 120, to implement object information synchronization of overall information of the virtual space, including locations and directions, statuses, environment changes, and the like of objects in the virtual space. In some embodiments, the synchronization plug-in modules 2111 may further communicate with the content processing apparatuses 130 to input or obtain specific media content for display. In some embodiments, the synchronization plug-in modules 2111 may provide interfaces in forms of libraries (lib). In some embodiments, the application logic modules 2112 may be specific implementation programs of an application instance developed by a developer of the application instance. In some embodiments, the application logic modules 2112 may alternatively be one application instance or a combination of a plurality of application instances in a plurality of application instances preset in the cloud service control system 10, or may be implemented by a developer through further development based on this. In this embodiment of this disclosure, the dependent service modules 2113 may be configured to implement functions such as digital human management, physical model cluster management, object rendering management, and virtual asset management. In some embodiments, the dependent service modules 2113 may be called by parts of the cloud service control system 10, for example, the application processing apparatuses 211, the service control apparatus 110, the interaction processing apparatus 120, and the content processing apparatuses 130 to implement corresponding functions. In this embodiment of this disclosure, the content processing apparatuses 212 may be at least a part of the content processing apparatus 130 shown in FIG. 1, and may be configured to provide related computing processing of the servers or clients associated with the content processing apparatuses 212. It should be understood that, the diagram shown in FIG. 2 shows an example in which each of the plurality of servers includes an independent application processing apparatus 211 and an independent content processing apparatus 212. However, a part or all of these structures may be implemented in any manner, for example, through centralized deployment or cross-node deployment.

In this embodiment of this disclosure, the clients 220 may include object inputs 221 (for example, object inputs 221-1, ..., and 221-N, which are collectively referred to as the "object inputs 221" below) and object outputs 222 (for example, object inputs 222-1, ..., and 222-N, which are collectively referred to as the "object outputs 222" below). In this embodiment of this disclosure, the object inputs 221 and the object outputs 222 that are used by users to access the virtual space via the clients 220 may be implemented based on input and output functions of browsers, or may be implemented based on desktop application programs, or may be implemented by calling lightweight plug-ins. This is not limited in this disclosure. In this embodiment of this disclosure, the object inputs 221 may be inputs of the users for the clients, for example, any information related to digital content of the virtual space, for example, for user account creation, user instruction, user virtual image operation, user space location and direction movement, and user audio/video content uploading. In some embodiments, the object inputs 221 may be automatically determined based on physical locations of the clients, weathers, time, or any information sensed by the clients, without requiring inputs of the users. In some embodiments, the object inputs 221 may alternatively be information about another application programs installed in the clients or information obtained from information input by the users for another application programs. In some embodiments, the object inputs 221 are provided to the cloud service control system 10, and updated object information is obtained and provided to the users as the object outputs 222. In this embodiment of this disclosure, the object outputs 222 may be, for example, the updated object information for the clients that is determined based on object input information, goes through audio/video decoding or network transmission processing at the clients, and then are presented to the users as media content, so that the users can experience a real-time scenario in the virtual space and feedback.

In some embodiments, as shown in FIG. 2, for a service control call shown by a solid line, the service control apparatus 110 performs user access control for the plurality of clients 220, and performs service process control for the plurality of servers 210. The server control apparatus 110 further communicates with the interaction processing apparatus 120, to perform service process control on the interaction processing apparatus 120, so as to manage communication connections between the interaction processing apparatus 120 and the plurality of servers 210. In some embodiments, based on control or status signaling transmission shown by a dashed line, the object information of the object inputs 221 of the clients 220 is sent, via uplink signaling, to the servers 210 associated with the clients 220. At the servers 210, the object information goes through audio/video or signaling coding processing or network processing via the content processing apparatuses 212, and then is transmitted to the application processing apparatuses 211. After being processed by the application logic modules 2112 and the dependent service modules 2113, the processed object information is sent to the interaction processing apparatus 120 via the synchronization plug-in modules 2111. Then, the interaction processing apparatus 120 integrates the object information based on the object information received from the plurality of clients, and returns integrated updated object information to the corresponding servers 210. The servers 210 obtain the updated object information via the synchronization plug-in modules 2111, and provide the updated object information to the application logic modules 2112 and the dependent service modules 2113 for processing. In data transmission shown by dash-dot lines, the application logic modules 2112 call dependent services of the dependent service modules 2113 to perform processing like physical model construction and asset rendering based on the updated object information, and then provides processed information to the content processing apparatuses 212. After performing audio/video or signaling coding processing or network processing based on the updated object information, the content processing apparatuses 212 provide content information like coded audio/video or signaling to corresponding clients 220 through downlink transmission, so that the clients 220 can present content based on the object outputs 222, and users can experience real-time virtual space samples.

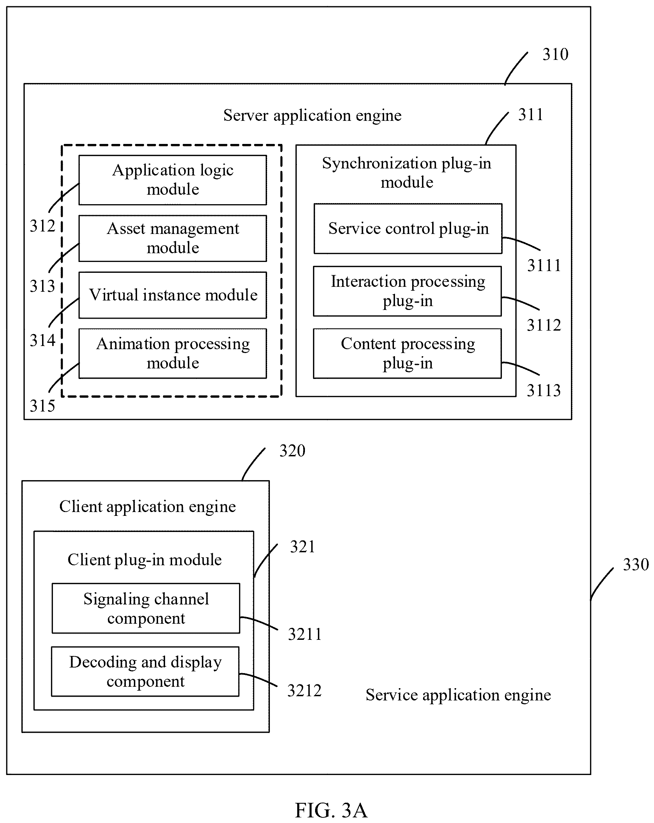

FIG. 3A is an example diagram of a service application engine according to an embodiment of this disclosure. In this embodiment of this disclosure, the service application engine 330 that is of an application deployment and that is to be uploaded to a service control apparatus 110 may include a server application engine 310 and a client application engine 320. As shown in FIG. 3A, the server application engine 310 may include a synchronization plug-in module 311, an application logic module 312, an asset management module 313, a virtual instance module 314, and an animation processing module 315. In this embodiment of this disclosure, the synchronization plug-in module 311 may include a service control plug-in 3111, an interaction processing plug-in 3112, and a content processing plug-in 3113. In some embodiments, the service control plug-in 3111 may be configured for communication between a server and the service control apparatus 110, to implement process control for a client virtual machine or a server virtual machine. In some embodiments, the interaction processing plug-in 3112 may be configured for communication between the server and an interaction processing apparatus 120, to implement object information synchronization of overall information of the virtual space, including locations and directions, statuses, environment changes, and the like of objects in the virtual space. In some embodiments, a synchronization plug-in module 2111 may be configured for communication between the server and a content processing apparatus 130, to input or obtain specific media content for display. In some embodiments, the application logic module 2112 may be a specific implementation program of an application instance developed by a developer of the application instance, or one application instance or a combination of a plurality of application instances in a plurality of application instances preset in a cloud service control system 10, or may be implemented by a developer through further development based on this. In some embodiments, the asset management module 313 is configured to manage various virtual assets, such as a storage resource, a computing resource, an image resource, and an audio/video resource, associated with the virtual space or the application instance. In some embodiments, the virtual instance module 314 may be configured to manage, for example, a digital human associated with, for example, a virtual image. In some embodiments, the animation processing module 315 may be configured to perform computing processing related to animation, such as physical model cluster management and object rendering management. Further, as shown in FIG. 3A, the client application engine 320 may include a client plug-in module 321. The client plug-in module 321 may include a signaling channel component 3211 and a decoding and display component 3212. In some embodiments, the signaling channel component 3211 may be configured for transmission of control signaling or status signaling between the client and the server, user access control processing between the client and the service control apparatus 110, and the like. In some embodiments, the decoding and display component 3212 may be configured to decode, based on updated object information received from the server, content to be presented to a user for display or presentation. It should be understood that, in this embodiment of this disclosure, the server application engine 310 and the client application engine 320 may be developed together by the application developer. In some embodiments, the application developer can integrate the synchronization plug-in module 311 into the server application engine 310, and integrate the client plug-in module 321 into the client application engine 320, for applicability to the cloud service control system 10 in this disclosure, without changing original application development logic. In some embodiments, the server application engine 310 and the client application engine 320 may also be preconfigured by the cloud service control system 10 for direct selection by the application developer or for development based on this. It should be understood that, in this embodiment of this disclosure, the application logic module 312, the asset management module 313, the virtual instance module 314, and the animation processing module 315 in the server application engine 310 may be configured as required, or may not be configured in some embodiments. In addition, whether to configure, or whether to configure all or a part of functions of the service control plug-in 3111, the interaction processing plug-in 3112, and the content processing plug-in 3113 in the synchronization plug-in module 311 may also be determined as required. In other words, in this embodiment of this disclosure, parts or functions of the server application engine 310 or the client application engine 320 may be in a loosely coupled architecture, and specific implementations of the parts or functions may be any combination without departing from the scope of this disclosure.

In this embodiment of this disclosure, in a plug-in call manner for the service control plug-in 3111, for example, a process start/stop command may be used to start or end a call, a session start/stop command may be used to start or end a process session, a health check (true/false) command may be used to check a process status, a create session command may be used to create a process session, and a client accept/leave command may be used to control client access and leaving. In this embodiment of this disclosure, in a plug-in call manner for the content processing plug-in 3113, for example, a start/stop stream command may be used to start or end video stream pushing. For example, the start stream command can be used to intercept data from an engine rendering output and convert the data into a video stream, and can be defined based on a virtual space identifier, network adaptation, GPU hardware acceleration, a video stream width, a video stream height, an output frame rate, and a transmission bandwidth. The stop stream command can be used to stop stream pushing. In a plug-in call manner for the interaction processing plug-in 3112, for example, a virtual space management control command and a user synchronization control command may be considered for implementation. The virtual space management control command may be defined based on space initialization, space destruction, space distribution policy, and the like, and the user synchronization control command may be defined based on accessing the space, exiting the space, entering a virtual space region, exiting or switching the virtual space region, location synchronization, direction synchronization, status synchronization, and the like. It should be understood that the foregoing plug-in call manners are merely examples, and other plug-in interface encapsulation or definition may be alternatively implemented based on a virtual space type, a service requirement, service management logic, and the like. In some embodiments, the plug-in call manners may be presented in a command form, or may be implemented in a blueprint form, and service interface integration may be implemented by using a graphical interface.

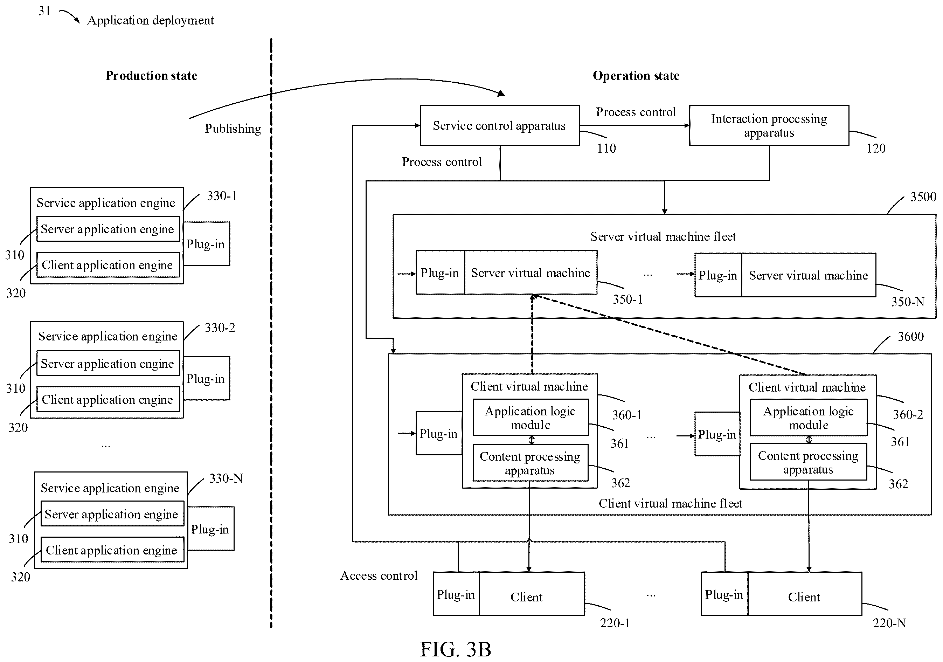

FIG. 3B is an example diagram of an application deployment according to an embodiment of this disclosure. As shown in FIG. 3B, in a production state of the application deployment 31, an application developer may develop a plurality of types of service application engines 330-1, 330-2, ..., and 330-N (which are sometimes collectively referred to as the "service application engines 330" below) that each include a server application engine 310 and a client application engine 320. The plurality of types of service application engines 330 may be developed by using different types of application engine tools or environments, and synchronization plug-in modules and client plug-in modules according to this embodiment of this disclosure are integrated on the service application engines 330. In some embodiments, the application developer may deploy the service application engines 330 to a service control apparatus 110 by uploading and transmitting the service application engines 330. Then, in an operation state of the application deployment 31, the service control apparatus 110 creates a server virtual machine fleet 3500 including one or more server virtual machines 350-1, ..., and 350-N (which are sometimes collectively referred to as the "server virtual machines 350" below) and a client virtual machine fleet 3600 including one or more client virtual machines 360-1, ..., and 360-N (which are sometimes collectively referred to as the "client virtual machines 360" below). In this embodiment of this disclosure, the server virtual machines 350 are configured to manage processing such as communication and object information synchronization of the corresponding client virtual machines 360, and the client virtual machines 360 are configured to implement computing and content processing associated with the server application engines 310. In this embodiment of this disclosure, the client virtual machines 360 may each include, for example, an application logic module 361 and a content processing apparatus 362. The application logic module 361 may include all or a part of structures or functions of the foregoing application logic modules according to embodiments of this disclosure, and the content processing apparatus 362 may include all or a part of structures or functions of the foregoing content processing apparatuses according to embodiments of this disclosure. In this embodiment of this disclosure, the server virtual machines 350 and the client virtual machines 360 may include plug-ins to communicate with the service control apparatus 110 to implement service process control. The plug-ins may be implemented by all or a part of the foregoing synchronization plug-in modules in embodiments of this disclosure.

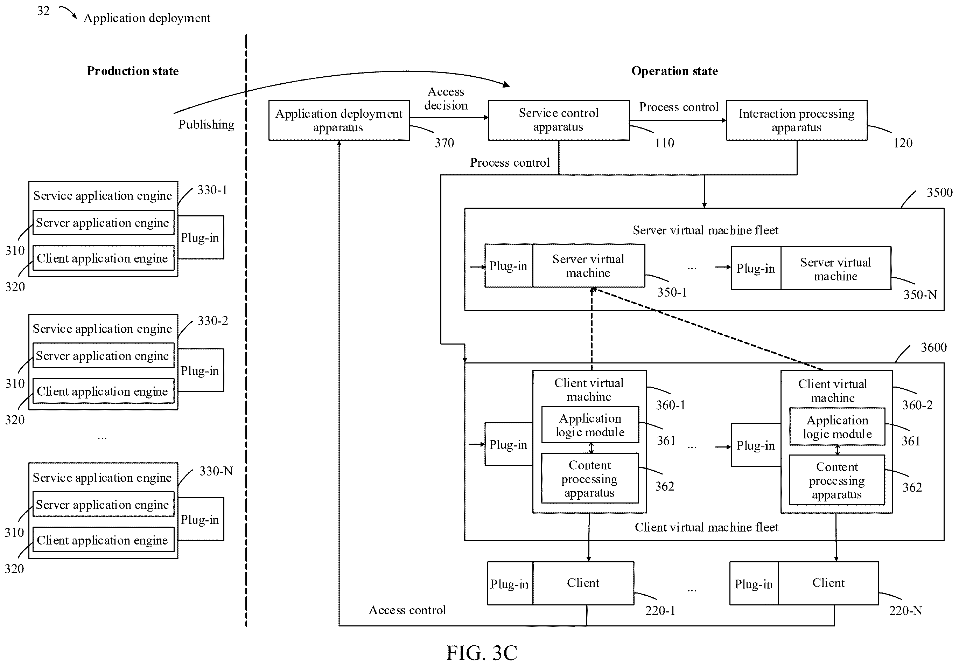

In this embodiment of this disclosure, a first process fleet is created in association with the server virtual machine fleet 3500, where the first process fleet includes one or more first processes respectively associated with the one or more server virtual machines 350-1, f., and 350-N; and a second process fleet is created in association with the client virtual machine fleet 3600, where the second process fleet includes one or more second processes respectively associated with the one or more client virtual machines 360-1, ..., and 360-N. In this embodiment of this disclosure, the first process fleet is used for life cycle control management such as starting, pausing, and stopping of a server virtual machine associated with an application instance, and the second process fleet is used for life cycle control management such as starting, pausing, and stopping of a client virtual machine associated with the application instance. In this embodiment of this disclosure, as shown by solid lines in FIG. 3B, the service control apparatus 110 performs user access control on a plurality of clients 220 via plug-ins installed on the clients 220, and performs service process control on the server virtual machines 350 and the client virtual machines 360 via plug-ins installed on the server virtual machines 350 and the client virtual machines 360. The server control apparatus 110 further communicates with an interaction processing apparatus 120, to perform service process control on the interaction processing apparatus 120. In this embodiment of this disclosure, the service control apparatus 110 performs service process control on communication between the server virtual machine fleet 3500 and the interaction processing apparatus 120 based on the first process fleet, and performs service process control on communication between the client 220, the client virtual machine fleet 3600, and the content processing apparatuses 362 based on the second process fleet. In this embodiment of this disclosure, as shown by dashed lines in FIG. 3B, the application logic modules 361 in the client virtual machines 360 may communicate with the server virtual machines 350, for example, send object information received from the clients 220 to the server virtual machines 350, or obtain updated object information from the server virtual machines 350 to return the updated object information to the clients 220. In some embodiments, when the clients 220 access virtual space, the clients 220 may request the service control apparatus 110 to perform server allocation, so as to start first processes and second processes that are associated with the clients 220, thereby implementing coding and video stream pushing for the virtual space accessed by the clients 220. It should be understood that other structures or procedures of an embodiment shown in FIG. 3C are all applicable to the cloud service control system 10 described in this disclosure, and are not limited to specific descriptions of FIG. 3B.

FIG. 3C is an example diagram of another application deployment according to an embodiment of this disclosure. Compared with the application deployment 31 in FIG. 3B, in the embodiment of the application deployment 32 in FIG. 3C, an application developer may manage access of a client to virtual space via an application deployment apparatus 370. In this embodiment of this disclosure, when accessing the virtual space, the client 220 sends a virtual space access request to the application deployment apparatus 370. Then, an access decision apparatus 370 sends access information and a client access decision of the client 220 to the service control apparatus 110, so that the service control apparatus 110 performs service process control according to this embodiment of this disclosure for the accessed client 220. In some embodiments, the application deployment apparatus 370 may be managed by the application developer, so that the application developer can control user access information to implement refined control processing. In some embodiments, the access decision apparatus 370 may be implemented by an application development platform managed by the application developer, to implement authentication, connection establishment, and the like of a client user. In some embodiments, the client access decision may include parameters such as a client access quantity threshold, a server lease quantity threshold, a storage resource usage threshold, and a computing resource usage threshold. It should be understood that other structures or procedures of the embodiment shown in FIG. 3C are all applicable to the cloud service control system 10 described in this disclosure, and are not limited to specific descriptions of FIG. 3C.

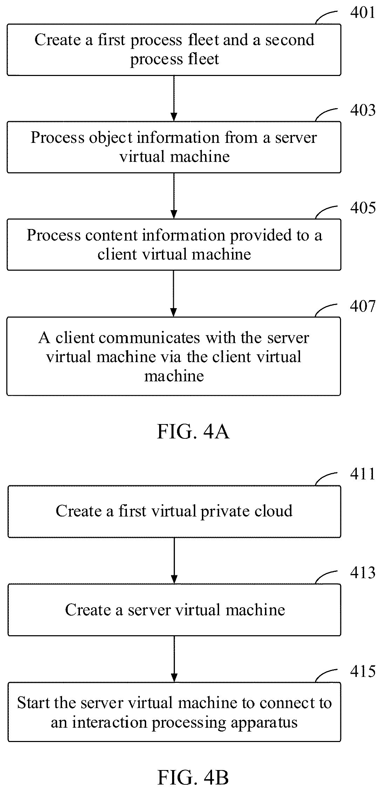

FIG. 4A is an example flowchart of a cloud service control method according to an embodiment of this disclosure. As shown in FIG. 4A, in box 401, a service control apparatus 110 creates a first process fleet and a second process fleet for an application, and configures a first process in the first process fleet and a second process in the second process fleet for a client 220 that accesses virtual space associated with the application. In box 403, an interaction processing apparatus 120 processes object information from one or more server virtual machines respectively associated with one or more first processes in the first process fleet. In box 405, a content processing apparatus 130 processes content information provided to one or more client virtual machines respectively associated with one or more second processes in the second process fleet. In box 407, the service control apparatus 110 controls the client 220 to access the virtual space via the client virtual machine associated with the first process and the server virtual machine associated with the second process. In some embodiments, the service control apparatus 110 creates the first process fleet and the second process fleet for the application. The first process fleet includes the one or more first processes respectively associated with the one or more server virtual machines, and the second process fleet includes the one or more second processes respectively associated with the one or more client virtual machines. In addition, the service control apparatus 110 configures the first process and the second process for the client 220 that accesses the virtual space associated with the application, to control the client 220 to access the virtual space via the client virtual machine associated with the first process and the server virtual machine associated with the second process. In some embodiments, the object information that is associated with the client 220 and that is sent by the client 220 to the server virtual machine via the client virtual machine is received at the server virtual machine, and the server virtual machine sends the object information associated with the client 220 to the interaction processing apparatus 120, and the interaction processing apparatus 120 determines updated object information for the client 220 based on the object information, and sends the updated object information to the client virtual machine via the server virtual machine. In some embodiments, the client virtual machine sends the updated object information to the content processing apparatus 130, and the content processing apparatus 130 determines updated content information for the client 220 based on the updated object information, and sends the updated content information to the client 220.

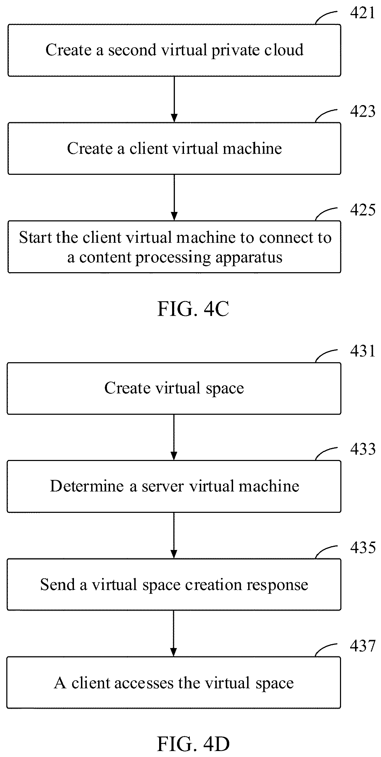

FIG. 4B and FIG. 4C are an example flowchart of process fleet creation in the cloud service control method according to this embodiment of this disclosure. As shown in FIG. 4B, in box 411, the service control apparatus 110 creates a first virtual private cloud based on creating the first process fleet. In box 413, the one or more server virtual machines are created for the first virtual private cloud. In box 415, the one or more server virtual machines are started to establish a connection with the interaction processing apparatus 120. As shown in FIG. 4C, in box 421, the service control apparatus 110 creates a second virtual private cloud based on creating the second process fleet. In box 423, the one or more client virtual machines are created for the second virtual private cloud. In box 425, the one or more client virtual machines are started to establish a connection with the content processing apparatus 130.

FIG. 4D is an example flowchart of virtual space creation and access in the cloud service control method according to this embodiment of this disclosure. As shown in FIG. 4D, in box 431, the service control apparatus 110 creates, based on a virtual space creation request, the virtual space associated with the first process fleet. In box 433, the service control apparatus 110 determines, for the first process fleet associated with the virtual space, one or more server virtual machines associated with one or more first process fleets of the first process fleet. In box 435, the service control apparatus 110 sends a virtual space creation response including a network address of the server virtual machine. In box 437, the client 220 accesses the virtual space by accessing the network address of the server virtual machine via the client virtual machine. In some embodiments, the service control apparatus 110 may further determine, based on a virtual space access request from the client 220, the first process fleet and the second process fleet that are associated with the virtual space to be accessed by the client 220. In some embodiments, the service control apparatus 110 may further configure the first process for the client 220 based on the first process fleet, configure the second process for the client 220 based on the second process fleet, and determine, for the second process, the client virtual machine associated with the second process. In some embodiments, the service control apparatus 110 may further send a virtual space access response including a network address of the client virtual machine to the client 220, so that the client 220 accesses the virtual space by accessing the network address of the client virtual machine and through the network address of the server virtual machine. In some embodiments, the client 220 may further send a virtual space disconnection request to the network address of the client virtual machine. The client virtual machine disconnects from the content processing apparatus 130 based on the virtual space disconnection request, stops the second process associated with the client virtual machine, and disconnects from the server virtual machine associated with the second process configured for the client 220.

In some embodiments, the server virtual machine sends, to the service control apparatus 110, a session status of the first process associated with the server virtual machine, and the client virtual machine sends, to the service control apparatus 110, a session status of the second process associated with the client virtual machine. The service control apparatus 110 may further determine, based on session statuses of the first processes and session statuses of the second processes, whether all sessions of the first processes in the first process fleet and all sessions of the second processes in the second process fleet are closed. In some embodiments, in response to determining that all the sessions of the first processes in the first process fleet are closed, the service control apparatus 110 deletes all the first processes in the first process fleet and all the server virtual machines associated with the first processes, and in response to determining that all the sessions of the second processes in the second process fleet are closed, the service control apparatus 110 deletes all the second processes in the second process fleet and all the server virtual machines associated with the second processes.

In some embodiments, the cloud service control system may further include an application deployment apparatus. The application deployment apparatus is configured to send a request for an application deployment to the service control apparatus 110 in response to application uploading. In some embodiments, in response to receiving the request for the application deployment from the application deployment apparatus, the service control apparatus 110 may further create a client 220 image for creating the second process fleet and a server image for creating the first process fleet, where the application deployment is associated with a third virtual private cloud. In some embodiments, the service control apparatus 110 may further configure a peering connection between the first virtual private cloud and the third virtual private cloud based on creating the first virtual private cloud associated with the first process fleet, and configure a peering connection between the second virtual private cloud and the first virtual private cloud based on creating the second virtual private cloud associated with the second process fleet.

In some embodiments, the service control apparatus 110 may further adjust a quantity of startable first processes in the first process fleet in response to a quantity of first processes in the first process fleet meeting a predefined condition. In some embodiments, the service control apparatus 110 may further increase the quantity of startable first processes in the first process fleet in response to the quantity of first processes in the first process fleet being equal to a preset quantity of startable first processes, and decreasing the quantity of startable first processes in the first process fleet in response to the quantity of first processes in the first process fleet being less than a preset threshold for a quantity of started first processes within predefined time. In addition or alternatively, the service control apparatus 110 may further adjust a quantity of startable second processes in the second process fleet in response to a quantity of second processes in the second process fleet meeting a predefined condition. In some embodiments, the service control apparatus 110 may further increase the quantity of startable second processes in the second process fleet in response to the quantity of second processes in the second process fleet being equal to a preset quantity of startable second processes, and decreasing the quantity of startable second processes in the second process fleet in response to the quantity of second processes in the second process fleet being less than a preset threshold for a quantity of started second processes within predefined time.

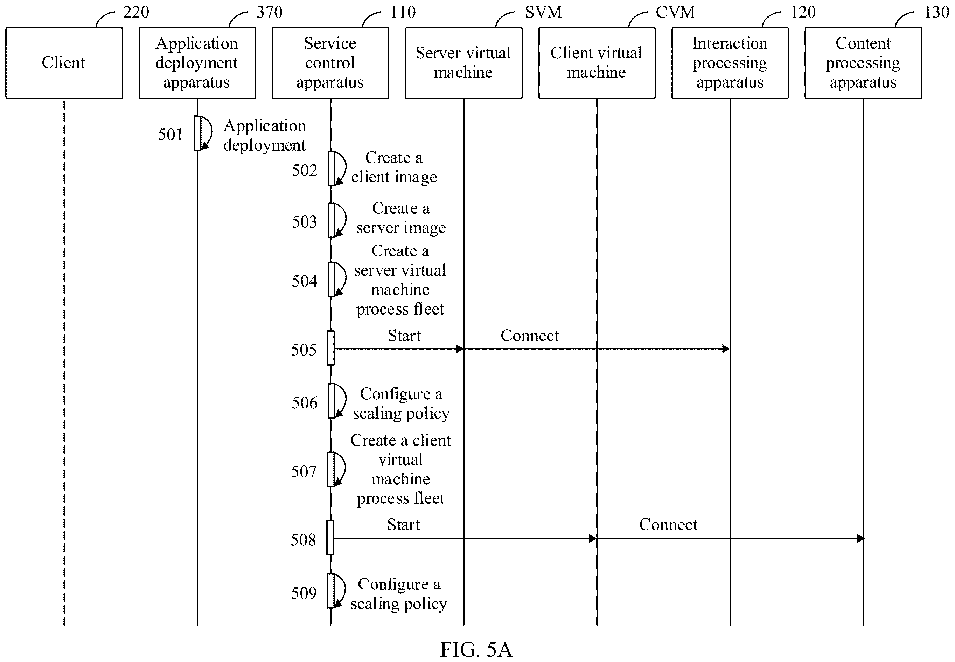

FIG. 5A is an example interaction diagram of application deployment and publishing of a cloud service control system according to an embodiment of this disclosure. As shown in FIG. 5A, in step 501, an application developer deploys an application of an application instance in an application deployment apparatus 370, to deploy the application to a service control apparatus 110. In some embodiments, a development-side virtual private cloud VPC1 (a "third virtual private cloud") associated with this application deployment may be created. In some embodiments, in step 501, a virtual machine management module may be further created to manage a virtual machine associated with the application instance. Return to FIG. 5A. In response to receiving the application deployment, the service control apparatus 110 creates a client 220 image for creating a client virtual machine process fleet (a "second process fleet") in step 502, and creates a server image for creating a server virtual machine process fleet (a "first process fleet") in step 503. In step 504, the service control apparatus 110 creates the server virtual machine process fleet (for example, Fleet ID1), where the server virtual machine process fleet is, for example, associated with the server image created in step 503, and the server virtual machine process fleet includes one or more server virtual machine processes respectively associated with one or more server virtual machines SVM. In some embodiments, the service control apparatus 110 creates a first virtual private cloud VPC2 based on creating the server virtual machine process fleet, and creates the one or more server virtual machines SVM for the first virtual private cloud VPC2. In step 505, the service control apparatus 110 starts the one or more server virtual machines SVM to establish a connection with an interaction processing apparatus 120, where the interaction processing apparatus 120 is configured to synchronize interaction information between the one or more server virtual machines SVM. In box 506, a scaling policy is configured for the server virtual machine process fleet.

In box 507, the service control apparatus 110 creates the client virtual machine process fleet (for example, Fleet ID2), where the client virtual machine process fleet is, for example, associated with the client 220 image created in step 502, and the client virtual machine process fleet includes one or more client virtual machine processes respectively associated with one or more client virtual machines CVM. In some embodiments, the service control apparatus 110 creates a second virtual private cloud VPC3 based on creating the client virtual machine process fleet, and creates the one or more client virtual machines CVM for the second virtual private cloud VPC3. In step 508, the service control apparatus 110 starts the one or more client virtual machines CVM to establish a connection with the content processing apparatus 130, where the content processing apparatus 130 is configured to process content information provided to the one or more client virtual machines CVM. In box 509, a scaling policy is configured for the client virtual machine process fleet. In some embodiments, at least a part of the client virtual machines CVM may be pre-started based on the scaling policy. In some embodiments, for the scaling policy, a quantity of startable client virtual machine processes in the client virtual machine process fleet may be adjusted in response to a quantity of client virtual machine processes in the client virtual machine process fleet meeting a predefined condition. In some embodiments, in response to the quantity of client virtual machine processes in the client virtual machine process fleet being equal to a preset quantity of startable client virtual machine processes, the quantity of startable client virtual machine processes in the client virtual machine process fleet is increased; and in response to the quantity of client virtual machine processes in the client virtual machine process fleet being less than a preset threshold for a quantity of started client virtual machine processes within predefined time, the quantity of startable client virtual machine processes in the client virtual machine process fleet is reduced. For example, when the quantity of client virtual machine processes reaches 1000, the quantity of startable client virtual machine processes in the client virtual machine process fleet is increased by 300, to provide an available buffer for the client virtual machines CVM. In addition, when the quantity of server virtual machine processes is less than 200 for a long time, the quantity of startable server virtual machine processes in the server virtual machine process fleet is reduced to 300.

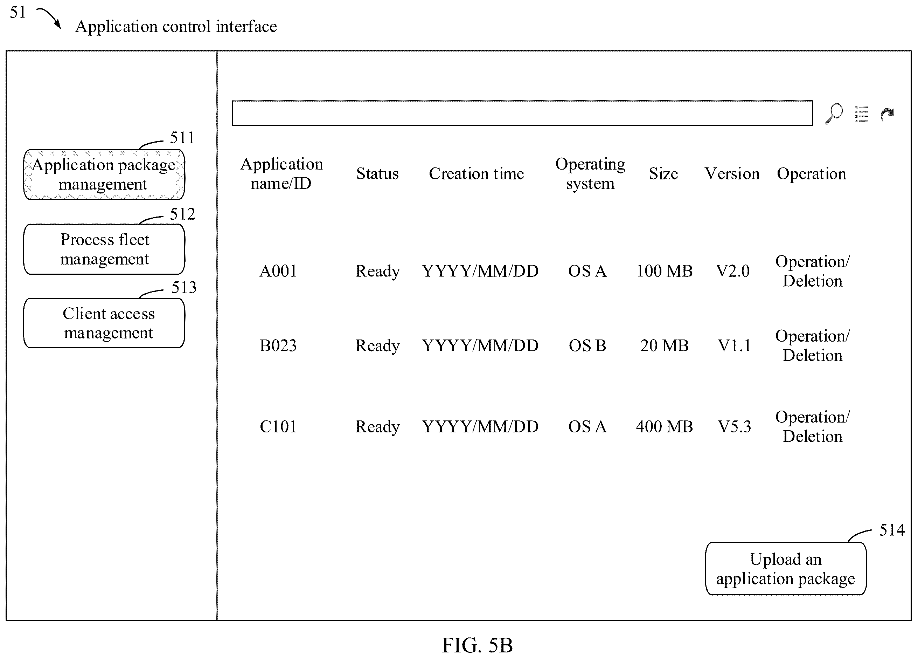

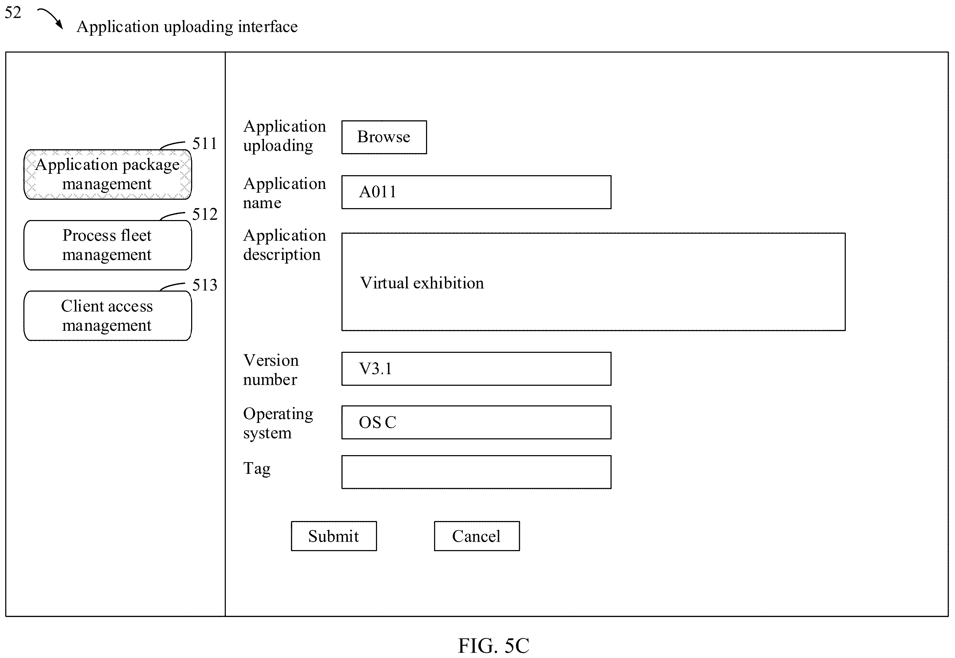

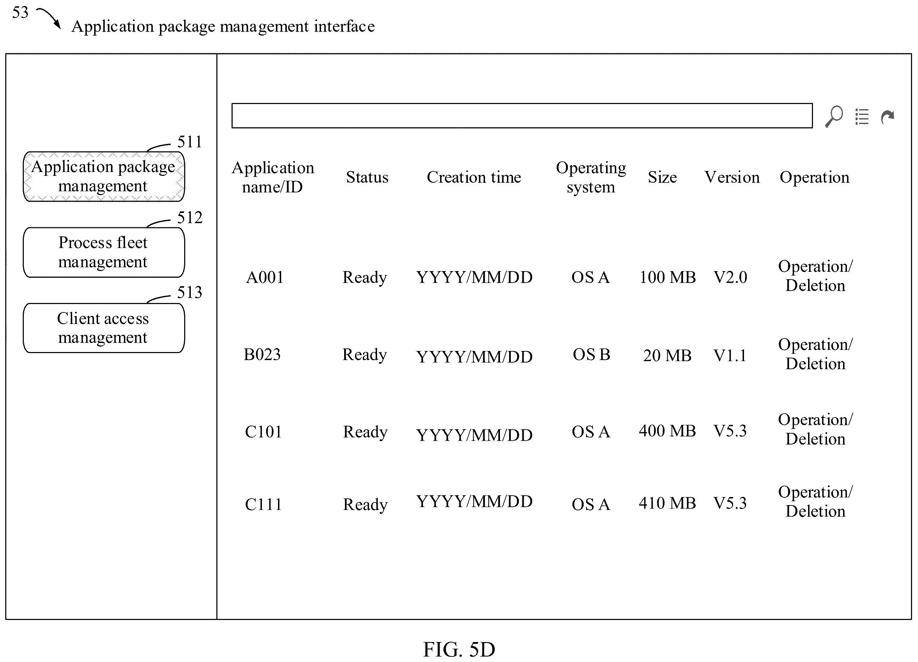

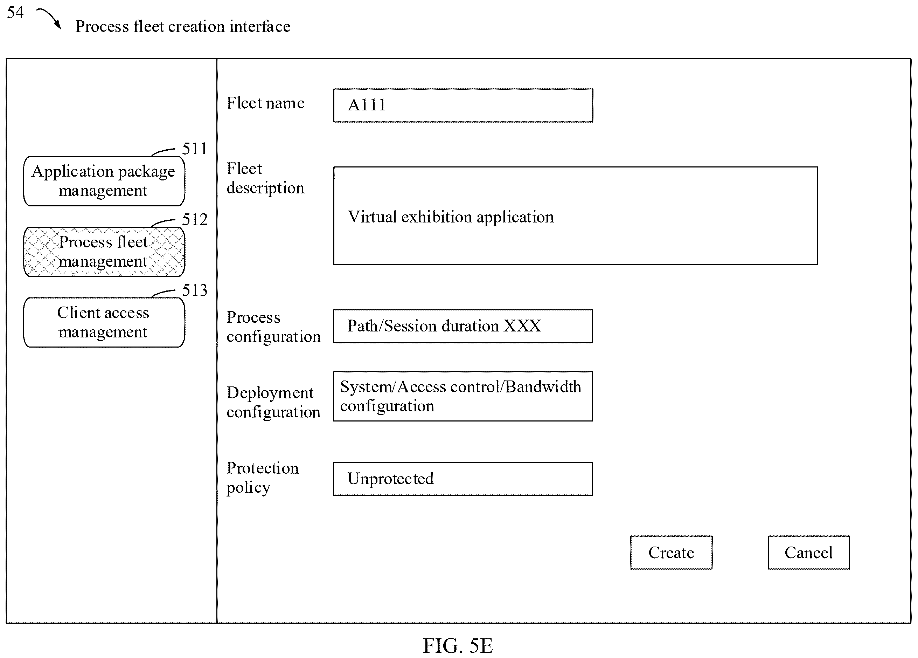

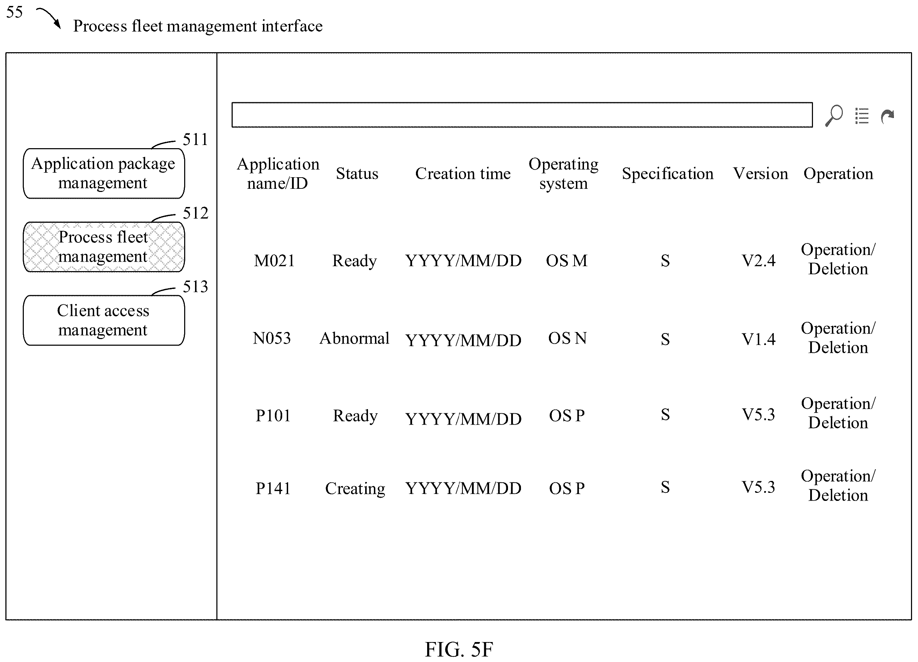

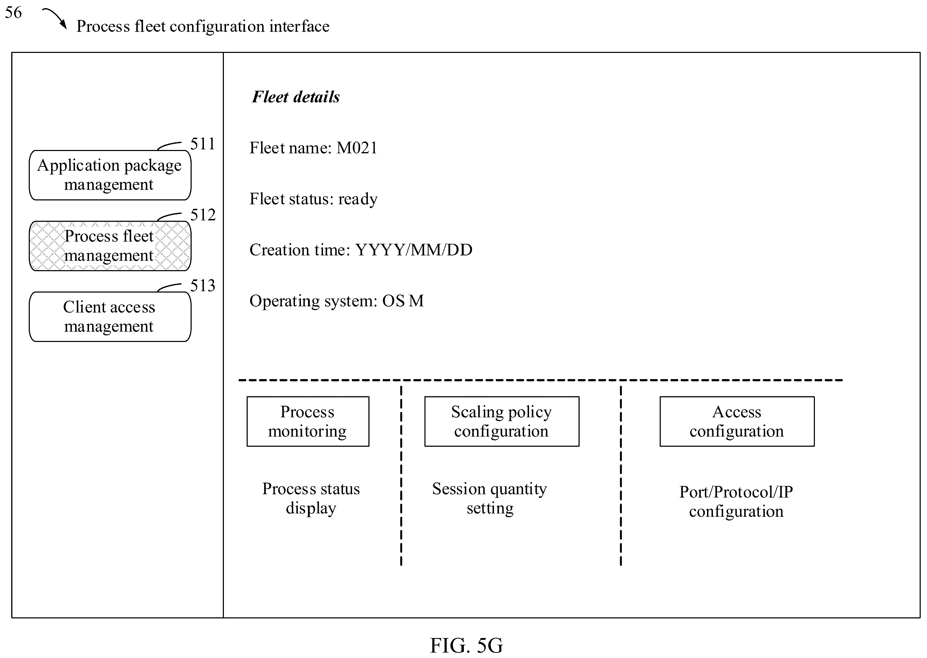

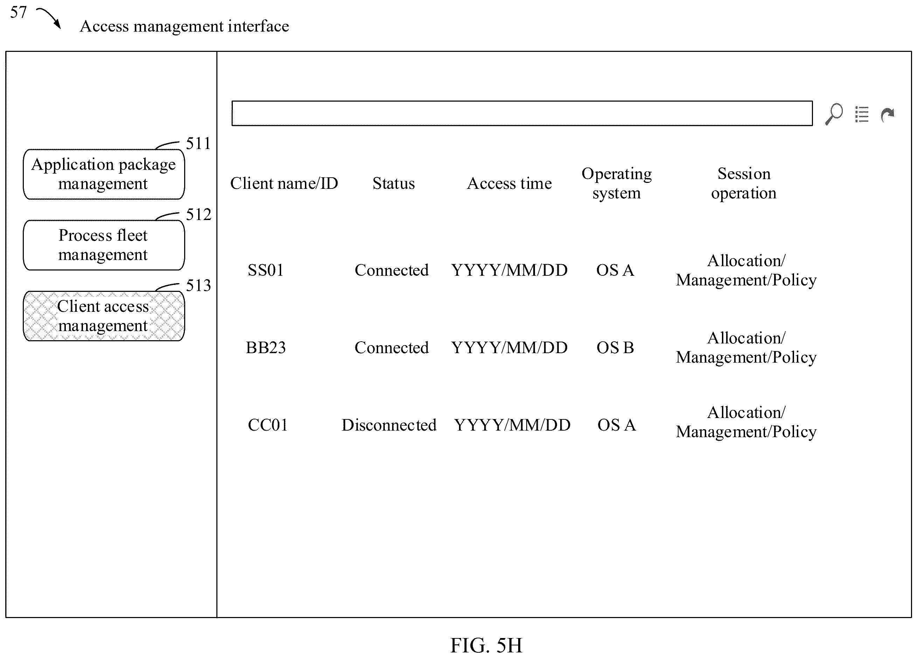

FIG. 5B to FIG. 5H are diagrams of user interfaces controlled by an application according to an embodiment of this disclosure. As shown in FIG. 5B, on an application control interface 51, an application developer may implement, for example, application package management 511, process fleet management 512, and client 220 access management 513. In some embodiments, through the application package management 511, the application developer may upload, manage, and publish an application package corresponding to a service application engine, and the like. In some embodiments, through the process fleet management 512, the application developer may implement application process fleet creation, scaling policy configuration, management of all process fleets, application process monitoring, and the like. In some embodiments, through the client 220 access management 513, the application developer may perform global session allocation, global session management, global matching policy management, and the like for the client 220. The application control interface 51 shown in FIG. 5B shows a status and an attribute that are displayed by default and that are of an application package of the developer in a current cloud service control system 10. The application developer may alternatively query, through searching, an application package that the application developer wants to manage, and perform processing such as operation or deletion on the corresponding application package. The application developer may operate buttons respectively corresponding to the application package management 511, the process fleet management 512, and the client 220 access management 513 to implement more specific functions. In some embodiments, the application developer may directly upload an application package by operating a button corresponding to uploading an application package 514. In some embodiments, as shown in FIG. 5C, after the button corresponding to uploading the application package 514 is operated, an application uploading interface 52 shown in FIG. 5C is presented to the application developer. In some embodiments, the application developer may enter, on the application uploading interface 52, attribute information like a name, a description, a version number, an operating system, and a tag that are related to an application to be uploaded, to perform uploading after submission. In some embodiments, as shown in FIG. 5D, after a button corresponding to the application package management 511 is operated, an application package management interface 53 may be entered. In some embodiments, the application developer may query a name, a status, creation time, an operating system, a size, and a version of each application package, and perform processing like operation or deletion, or may query, through searching, an application package that the application developer wants to manage. In some embodiments, for a process fleet corresponding to an application package, a button corresponding to the process fleet management 512 may be operated to implement process fleet management. In some embodiments, as shown in FIG. 5E, the application developer may enter a process fleet creation interface 54, and create an application process fleet for a specific application package by entering information like a fleet name, a fleet description, a resource type, and an application package name. In some embodiments, the application developer may further configure a path of a process, a startup parameter, a quantity of allowed concurrent processes, and session duration, or configure parameters of an application deployment, such as specification, a system, an access control parameter, or a bandwidth, or may further configure a protection policy to enable the system to terminate a process activity in a specific case. In some embodiments, as shown in FIG. 5F, a process fleet management interface 55 may further be entered. In some embodiments, the application developer may query a name, a status, creation time, an operating system, specification, and a version of each process fleet, and perform processing like configuration or deletion, or may query, through searching, a process fleet that the application developer wants to manage. In some embodiments, the application developer may further perform configuration in detail for a specific process fleet. For example, as shown in FIG. 5G, the application developer may enter a process fleet configuration interface 56 of a specific process fleet. On the process fleet configuration interface 56, the application developer may query details about a specific process fleet, and may further implement operations such as process monitoring, access configuration, and scaling policy configuration. In some embodiments, a status, a network address, a port number, a quantity of occupied sessions, and a quantity of sessions allowed to be occupied of a specific process may be viewed through process monitoring. In some embodiments, parameters such as a port range, an adopted protocol, and a network address range may be set through access configuration, and an access permission may be set. In some embodiments, a quantity of startable application process fleets may be set through scaling policy configuration, and a quantity of buffered process sessions may be further set, so that process configuration adjustment can be automatically performed. In some embodiments, at least a part of the server virtual machines SVM may be pre-started based on the scaling policy. In some embodiments, for the scaling policy, a quantity of startable server virtual machine processes in the server virtual machine process fleet may be adjusted in response to a quantity of server virtual machine processes in the server virtual machine process fleet meeting a predefined condition. In some embodiments, in response to the quantity of server virtual machine processes in the server virtual machine process fleet being equal to a preset quantity of startable server virtual machine processes, the quantity of startable server virtual machine processes in the server virtual machine process fleet is increased; and in response to the quantity of server virtual machine processes in the server virtual machine process fleet being less than a preset threshold for a quantity of started server virtual machine processes within predefined time, the quantity of startable server virtual machine processes in the server virtual machine process fleet is reduced. For example, when the quantity of server virtual machine processes reaches 100, the quantity of startable server virtual machine processes in the server virtual machine process fleet is increased by 20, to provide an available buffer for the server virtual machines SVM. In addition, when the quantity of server virtual machine processes is less than 10 for a long time, the quantity of startable server virtual machine processes in the server virtual machine process fleet is reduced to 15. In some embodiments, as shown in FIG. 5H, after a button corresponding to the client 220 access management 513 is operated, a client 220 access management interface 57 is displayed. In some embodiments, the application developer may query, on the client 220 access management interface 57, a name, a status, access time, and an operating system for each client 220, and perform session operation processing such as allocation, management, or policy decision, or may query, through searching, a client 220 that the application developer wants to manage.

In this embodiment of this disclosure, the processing related to the application process fleet management and the client access management may be called or implemented by using a command in any form. In some embodiments, mapping between a processing type of the application process management and a command may be implemented by using a specific example in Table 1. In some embodiments, mapping between a processing type of the server session management and a command may be implemented by using a specific example in Table 2. In some embodiments, mapping between a processing type of the client access management and a command may be implemented by using a specific example in Table 3. It should be understood that a management command in this disclosure is not limited thereto, and may alternatively be defined in any format or any programming language as required.

**Table 1 Mapping between processing types of the application process management and commands**

| Processing type | Command example |
|---|---|
| Creating an application process fleet | post/{project_id}/fleets |
| Querying an application process fleet list | get/{project _id}/fleets |
| Deleting an application process fleet | delete/{project_id}/fleets/{fleet_id} |
| Querying basic information of an application fleet | get/{project_id}/fleets/{fleet_id} |
| Updating basic information of an application fleet | put/{project_id}/fleets/ {fleet id} |
| Querying an inbound rule of an application fleet | get/{project_id}/fleets/{fleet_id}/inbound-permissions |
| Updating an inbound rule of an application fleet | put/{project_id}/fleets/{fleet_id}/inbound-permissions |
| Querying a running configuration of an application fleet | get/{project_id}/fleets/{fleet_id}/runtime-configuration |
| Updating a running configuration of an application fleet | put/{project_id}/fleets/{fleet_id}/runtime-configuration |
| Obtaining capacity information of an application fleet | get/{project_id}/fleets/{fleet_id}/instance-capacity |
| Updating capacity information of an application fleet | put/{project_id}/fleets/{fleet_id}/instance-capacity |
| Obtaining an application process list | get/{project_id}/app-processes |

**Table 2 Mapping between processing types of the server session management and commands**

| Processing type | Command example |
|---|---|
| Creating a server session | post/{project_id}/server-sessions |
| Obtaining a server session list | get/{project_id}/server-sessions |
| Obtaining details of a server session | get/{project_id}/server-sessions/{server_session_id} |
| Updating a server session | put/{project_id}/server-sessions/{server_session_id} |

**Table 3 Mapping between processing types of the client access management and commands**

| Processing type | Command example |
|---|---|
| Creating a client session | post/{project_id}/server-sessions/{server_session_id}/client-sessions |
| Obtaining a client session list | get/{project_id}/server-sessions/{server_session_id}/client-sessions |
| Creating client sessions in batches | post/{project_id}/server-sessions/{server_session_id}/client-sessions/batch-create |
| Obtaining details of a client session | get/{project_id}/server-sessions/{server_session_id}/client-sessions/{clien_session_id} |

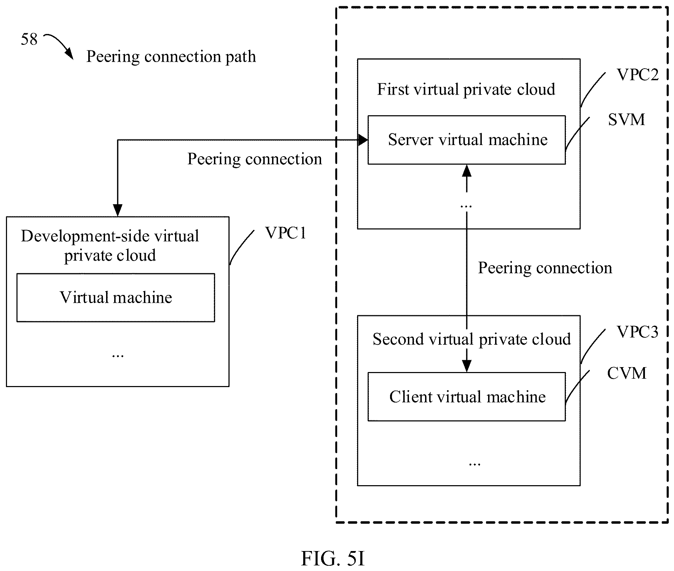

In some embodiments, in step 504, a peering (Peering) connection between a first virtual private cloud VPC2 and a development-side virtual private cloud VPC1 is configured based on creating the first virtual private cloud VPC2 associated with the server virtual machine process fleet. In step 507, a peering connection between a second virtual private cloud VPC3 and the first virtual private cloud VPC2 is configured based on creating the second virtual private cloud VPC3 associated with the client virtual machine process fleet. FIG. 5I is an example diagram of a peering connection according to an embodiment of this disclosure. As shown in a peering connection path 58 in FIG. 5I, a development-side virtual private cloud VPC1 created by an application deployment apparatus 370 of an application developer includes a plurality of virtual machines, and a first virtual private cloud VPC2 created by a service control apparatus 110 is associated with a server virtual machine SVM. In this way, a peering connection is established between the development-side virtual private cloud VPC1 and the first virtual private cloud VPC2 to implement communication between the plurality of virtual machines on a development side and the server virtual machine SVM in a cloud service control system 10, thereby implementing internal interaction on a management plane. In addition, the second virtual private cloud VPC3 created by the service control apparatus 110 is associated with a client virtual machine CVM, and a peering connection is established between the first virtual private cloud VPC2 and the second virtual private cloud VPC3. In this way, internal network communication between the server virtual machine SVM and the client virtual machine CVM can also be implemented. In some embodiments, communication of a peering connection may alternatively be directly 58 performed through a public network, to implement interaction. According to this embodiment of this disclosure, efficient communication and connection between a development-side platform of the application developer and a cloud service system 10 can be implemented.

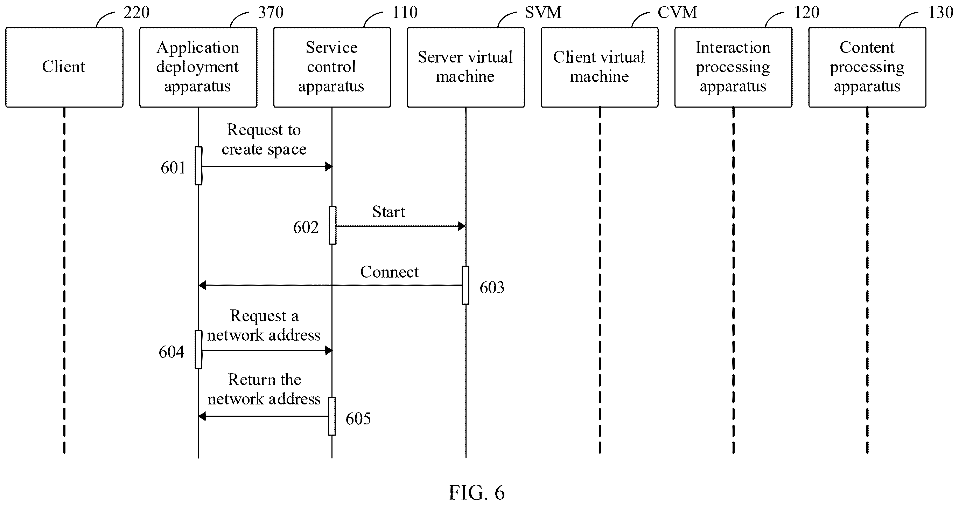

FIG. 6 is an example interaction diagram of virtual space creation of a cloud service control system according to an embodiment of this disclosure. As shown in FIG. 6, in step 601, an application deployment apparatus 370 sends a virtual space creation request to a service control apparatus 110. In some embodiments, the application deployment apparatus 370 sends a create session (Fleet ID1) command to the service control apparatus 110 to specify that virtual space is created for a specific server virtual machine process fleet. In some embodiments, in step 602, the service control apparatus 110 creates the virtual space associated with the server virtual machine process fleet based on the virtual space creation request, and determines and starts one or more server virtual machines SVM (for example, Session ID 1) associated with one or more server virtual machine process fleets of the server virtual machine process fleet for the server virtual machine process fleet associated with the virtual space. In step 603, a connection is established between the started server virtual machine SVM and the application deployment apparatus 370. In step 604, the application deployment apparatus 370 requests a network address of the started server virtual machine SVM from the service control apparatus 110. In step 605, the service control apparatus 110 sends, to the application deployment apparatus 370, a virtual space creation response including the network address of the started server virtual machine SVM, where the virtual space may be provided by accessing the network address of the server virtual machine SVM. In some embodiments, the network address may include an IP address (Internet Protocol Address) and a port number.

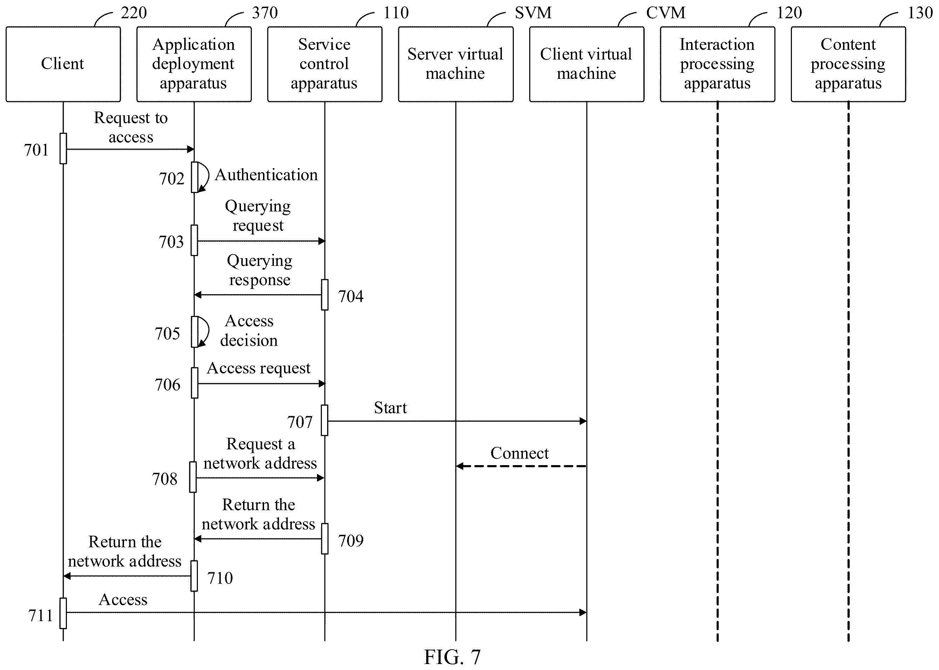

FIG. 7 is an example interaction diagram of a user access procedure of a cloud service control system according to an embodiment of this disclosure. As shown in FIG. 7, in step 701, a client 220 sends a virtual space access request to an application deployment apparatus 370, to request to access specific virtual space. In step 702, the application deployment apparatus 370 authenticates the client 220 to determine information about the client 220. In step 703, the application deployment apparatus 370 sends a querying request for a server virtual machine process fleet and a server virtual machine SVM that are associated with the virtual space to a service control apparatus 110. In step 704, the service control apparatus 110 determines the server virtual machine process fleet associated with the virtual space to be accessed by the client 220, and sends the determined server virtual machine process fleet associated with the virtual space to the application deployment apparatus 370 as a querying response. In step 705, the application deployment apparatus 370 determines, from the returned server virtual machine process fleet, a server virtual machine process for the client 220 to access the virtual space, so as to access the associated server virtual machine SVM. In step 706, the application deployment apparatus 370 sends a virtual space access request of the client 220 to the service control apparatus 110. In some embodiments, the application deployment apparatus 370 sends a create session (Fleet ID2/Server IP:port) command to the service control apparatus 110. In some embodiments, when there is a lack of an available session of the server virtual machine process, the application deployment apparatus 370 may create a new session in the virtual space access request to create a new server virtual machine process. In some embodiments, when there is no lack of an available session of the server virtual machine process, the application deployment apparatus 370 may select the available session of the server virtual machine process based on a predefined policy, to call the corresponding server virtual machine process. In step 707, the service control apparatus 110 configures the server virtual machine process and the client virtual machine process for the client 220 that accesses the virtual space associated with an application based on the virtual space access request from the client 220, to control the client 220 to access the virtual space via the client virtual machine CVM associated with the server virtual machine process and the server virtual machine SVM associated with the client virtual machine process. In some embodiments, the service control apparatus 110 determines the server virtual machine process fleet and a client virtual machine process fleet that are associated with the virtual space to be accessed by the client 220, configures the server virtual machine process for the client 220 based on the server virtual machine process fleet, configures the client virtual machine process for the client 220 based on the client virtual machine process fleet, and determines and starts, for the client virtual machine process, the client virtual machine CVM associated with the client virtual machine process. Therefore, a connection is established between the client virtual machine CVM and the server virtual machine SVM for the client 220. In step 708, the application deployment apparatus 370 requests a network address of the started client virtual machine CVM from the service control apparatus 110. In steps 709 and 710, the service control apparatus 110 sends a virtual space access response including the network address of the started client virtual machine CVM to the client 220 via the application deployment apparatus 370, so that the client 220 accesses the virtual space in step 711 by accessing the network address of the client virtual machine CVM and through the network address of the server virtual machine SVM. In some embodiments, when there are a plurality of server virtual machine processes, the plurality of server virtual machine processes may also be implemented by reusing a same fleet based on general logic. In this way, dynamic loading of the process fleet can be implemented, and a calculation loss can be reduced.

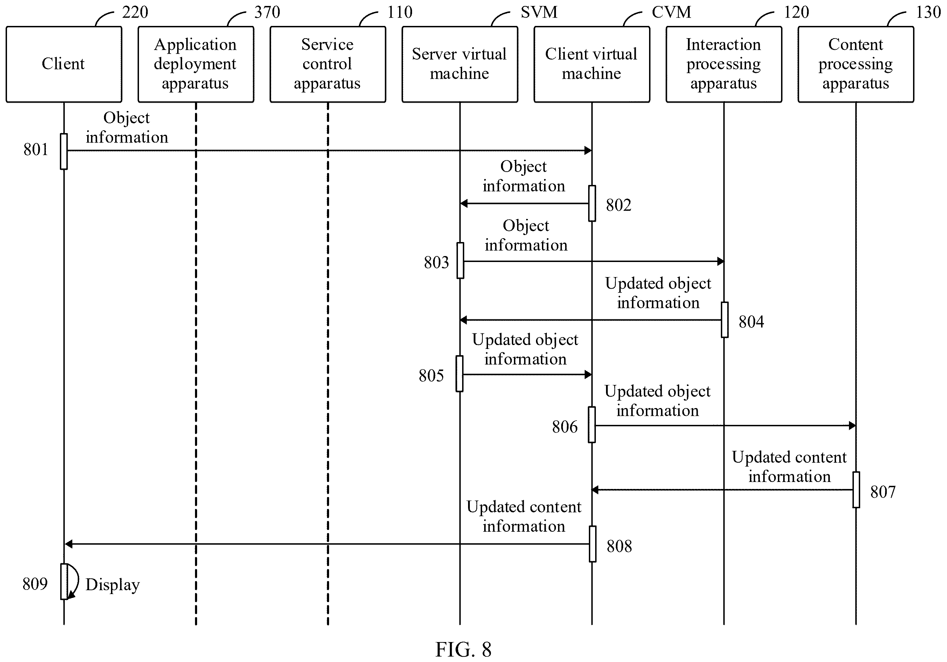

FIG. 8 is an example interaction diagram of an operation state procedure of a cloud service control system according to an embodiment of this disclosure. As shown in FIG. 8, in step 801, a client 220 sends object information associated with the client 220 to a client virtual machine CVM. In step 802, the client virtual machine CVM sends the object information associated with the client 220 to a server virtual machine SVM. In step 803, the server virtual machine SVM sends the object information associated with the client 220 to an interaction processing apparatus 120. In step 804, the interaction processing apparatus 120 determines updated object information for the client 220 based on the object information, and sends the updated object information to the server virtual machine SVM. In some embodiments, the interaction processing apparatus 120, for example, collects object information of clients corresponding to server virtual machines, to generate overall object information of the virtual space. In some embodiments, the interaction processing apparatus 120 may send all or a part of the overall object information of the virtual space as the updated object information to the server virtual machine. In step 805, the server virtual machine SVM sends the updated object information to the client virtual machine CVM. In step 806, the client virtual machine CVM sends the updated object information to the content processing apparatus 130. In step 807, the content processing apparatus 130 determines updated content information for the client 220 based on the updated object information, and sends the updated content information based on the updated object information to the client virtual machine CVM. In step 808, the client virtual machine CVM sends the updated content information based on the updated object information to the client 220. In step 809, the client 220 decodes and displays, based on the updated content information, the content that is related to the virtual space and that is presented to the user.

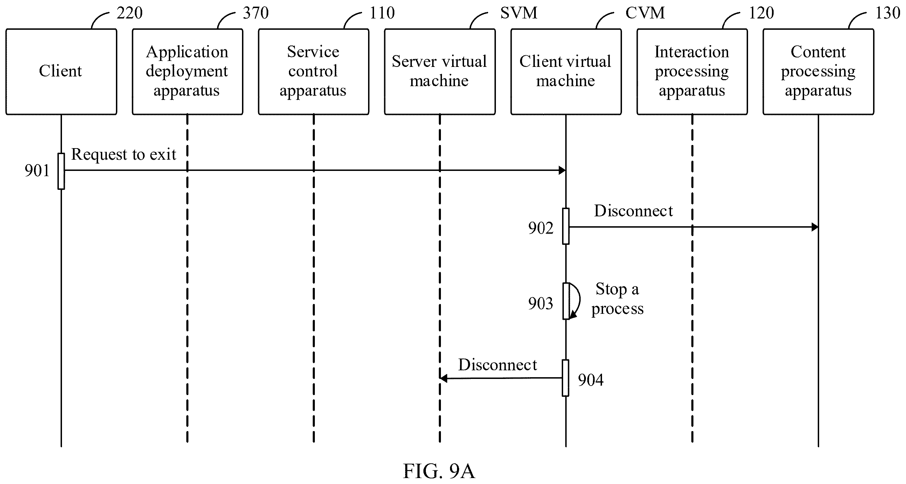

FIG. 9A is an example interaction diagram of an access and exit procedure of a cloud service control system according to an embodiment of this disclosure. As shown in FIG. 9A, in step 901, the client 220 sends a virtual space disconnection request to the client virtual machine CVM. In step 902, the client virtual machine CVM disconnects from the content processing apparatus 120 at the client virtual machine CVM based on the virtual space disconnection request sent from the client 220 to a network address of the client virtual machine CVM. In step 903, a client virtual machine process associated with the client virtual machine CVM is closed. In step 904, the client virtual machine CVM disconnects from a server virtual machine SVM associated with the client virtual machine process configured for the client 220. According to this embodiment of this disclosure, a main part of the access and exit procedure is implemented in the cloud service control system, so that access and exit of the client 220 can be quickly implemented at the client 220, thereby effectively improving user experience.

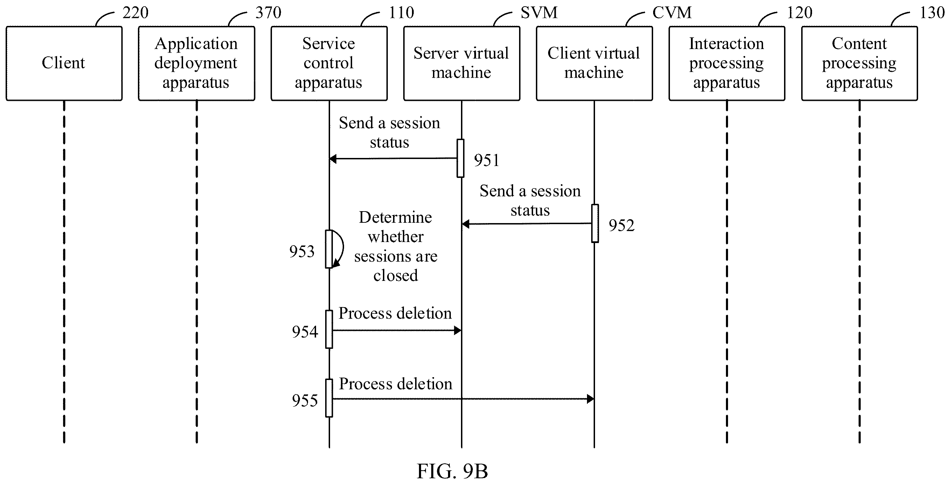

FIG. 9B is an example interaction diagram of a session destruction procedure of a cloud service control system according to an embodiment of this disclosure. As shown in FIG. 9B, in step 951, the server virtual machine SVM sends a session status of a server virtual machine process associated with the server virtual machine SVM to a service control apparatus 110. In step 952, the client virtual machine CVM sends a session status of a client virtual machine process associated with a client virtual machine CVM to the service control apparatus 110. In step 953, the service control apparatus 110 determines, based on session statuses of server virtual machine processes and session statuses of client virtual machine processes, whether all sessions of the server virtual machine processes in the server virtual machine process fleet and all session of the client virtual machine processes in the client virtual machine process fleet are closed. In step 954, in response to determining that all the sessions of the server virtual machine processes in the server virtual machine process fleet are closed, the service control apparatus 110 deletes all the server virtual machine processes in the server virtual machine process fleet and all server virtual machines SVM associated with the server virtual machine processes. In step 955, in response to determining that all the sessions of the client virtual machine processes in the client virtual machine process fleet are closed, the service control apparatus 110 deletes all the client virtual machine processes in the client virtual machine process fleet and all server virtual machines SVM associated with the client virtual machine processes. According to this embodiment of this disclosure, automatic process management can be implemented based on session statuses proactively reported by virtual machines, and the corresponding virtual machines can be deleted, so that idle resources can be released in time, thereby improving virtual space management efficiency.

It should be understood that, in embodiments of this disclosure, although specific examples in FIG. 5A to FIG. 9B are described by using an example in which there is the application deployment apparatus 370, in some embodiments, a part of operations or processing of the application deployment apparatus 370 may also be integrated into the service control apparatus 110 to be provided for an application developer, or a similar apparatus or module is independently configured in the cloud service control system 10 to implement a corresponding function. For example, when an application developer rents a development platform of the cloud service control system 10, the application developer may directly complete application deployment of an entire procedure in the cloud service control system 10. In some embodiments, an application developer may alternatively implement at least a part of functions of the application deployment apparatus 370 by calling an interface or installing a plug-in. An implementation of the application deployment apparatus 370 is not particularly limited in this disclosure.

The foregoing mainly describes the embodiments of this disclosure based on the cloud service control system 10. The following specifically describes a cloud service control method used to implement the cloud service control system 10. In this embodiment of this disclosure, the cloud service control method includes: creating a first process fleet and a second process fleet for an application, where the first process fleet includes one or more first processes respectively associated with one or more server virtual machines, and the second process fleet includes one or more second processes respectively associated with one or more client virtual machines; and configuring the first process and the second process for a client that accesses virtual space associated with the application, to control the client to access the virtual space via the client virtual machine associated with the first process and the server virtual machine associated with the second process.

In some embodiments, controlling the client to access the virtual space via the client virtual machine and the server virtual machine includes: receiving, at the server virtual machine, object information associated with the client from the client via the client virtual machine; sending, at the server virtual machine, the object information associated with the client to an interaction processing apparatus, where the interaction processing apparatus determines updated object information for the client based on the object information; and receiving the updated object information at the client virtual machine from the interaction processing apparatus via the server virtual machine. In some embodiments, controlling the client to access the virtual space via the client virtual machine and the server virtual machine further includes: sending, at the client virtual machine, the updated object information to the content processing apparatus, so that the content processing apparatus determines updated content information for the client based on the updated object information, and sends the updated content information to the client. In this way, the interaction processing apparatus can synchronize object information for a plurality of clients and servers that access the virtual space, and the content processing apparatus can generate specific presentation content based on synchronized object information for the clients, so that an application developer can implement large-scale multi-user online virtual space access processing without building a dedicated server.

In some embodiments, creating the first process fleet includes: creating a first virtual private cloud based on creating the first process fleet; creating the one or more server virtual machines for the first virtual private cloud; and starting the one or more server virtual machines to establish a connection with the interaction processing apparatus, where the interaction processing apparatus is configured to process object information from the one or more server virtual machines. In some embodiments, creating the second process fleet includes: creating a second virtual private cloud based on creating the second process fleet; creating the one or more client virtual machines for the second virtual private cloud; and starting the one or more client virtual machines to establish a connection with the content processing apparatus, where the content processing apparatus is configured to process content information provided to the one or more client virtual machines. In this way, a plurality of server virtual machines and a plurality of client virtual machines are established by using virtual private clouds, so that computing processing for a specific purpose can be implemented, and loosely coupled independent control can be implemented for different functions, thereby flexibly implementing deployment and running of a large-scale multi-user online application instance.

In some embodiments, the cloud service control method further includes: creating, based on a virtual space creation request, the virtual space associated with the first process fleet; determining, for the first process fleet associated with the virtual space, one or more server virtual machines associated with one or more first process fleets of the first process fleet; and sending a virtual space creation response including a network address of the server virtual machine, where the virtual space is provided by accessing the network address of the server virtual machine. In some embodiments, configuring the first process and the second process for the client further includes: determining, based on a virtual space access request from the client, the first process fleet and the second process fleet that are associated with the virtual space to be accessed by the client; configuring the first process for the client based on the first process fleet, and configuring the second process for the client based on the second process fleet; determining the client virtual machine associated with the second process for the second process; and sending a virtual space access response including a network address of the client virtual machine to the client, so that the client accesses the virtual space by accessing the network address of the client virtual machine and through the network address of the server virtual machine. In this way, a main virtual space processing procedure is implemented on the cloud server, so that a user can implement quick access from a client to the virtual space by performing a simple arrangement on the client, thereby effectively improving user experience.

In some embodiments, the cloud service control method further includes: performing the following operations based on a virtual space disconnection request sent from the client to the network address of the client virtual machine: disconnecting the client virtual machine from the content processing apparatus; stopping the second process associated with the client virtual machine; and disconnecting the client virtual machine from the server virtual machine associated with the second process configured for the client. In this way, a main part of an access and exit procedure is implemented in the cloud service control system, and access exit of the client can be quickly implemented at the client, thereby further effectively improving user experience.

In some embodiments, the cloud service control method further includes: determining, based on session statuses of the first processes associated with the server virtual machines and session statuses of the second processes associated with the client virtual machines, whether all sessions of the first processes in the first process fleet and all sessions of the second processes in the second process fleet are closed; in response to determining that all the sessions of the first processes in the first process fleet are closed, deleting all the first processes in the first process fleet and all the server virtual machines associated with the first processes; and in response to determining that all the sessions of the second processes in the second process fleet are closed, deleting all the second processes in the second process fleet and all server virtual machines associated with the second processes. In this way, automatic process management can be implemented based on session statuses proactively reported by virtual machines, and the corresponding virtual machines can be deleted, so that idle resources can be released in time, thereby improving virtual space management efficiency.

In some embodiments, the cloud service control method further includes: in response to receiving an application deployment, creating a client image for creating the second process fleet and a server image for creating the first process fleet, where the application deployment is associated with a third virtual private cloud; configuring a peering connection between the first virtual private cloud and the third virtual private cloud based on creating the first virtual private cloud associated with the first process fleet; and configuring a peering connection between the second virtual private cloud and the first virtual private cloud based on creating the second virtual private cloud associated with the second process fleet. In this way, efficient communication and connection between the application deployment apparatus serving as a development-side platform of the application developer and the cloud service system can be implemented, without changing an existing development-side platform architecture of the application developer, thereby implementing efficient and convenient development experience.

In some embodiments, the cloud service control method further includes at least one of the following: adjusting a quantity of startable first processes in the first process fleet in response to a quantity of first processes in the first process fleet meeting a predefined condition; or adjusting a quantity of startable second processes in the second process fleet in response to a quantity of second processes in the second process fleet meeting a predefined condition. In some embodiments, the cloud service control method further includes at least one of the following: increasing the quantity of startable first processes in the first process fleet in response to the quantity of first processes in the first process fleet being equal to a preset quantity of startable first processes, and decreasing the quantity of startable first processes in the first process fleet in response to the quantity of first processes in the first process fleet being less than a preset threshold for a quantity of started first processes within predefined time; or increasing the quantity of startable second processes in the second process fleet in response to the quantity of second processes in the second process fleet being equal to a preset quantity of startable second processes, and decreasing the quantity of startable second processes in the second process fleet in response to the quantity of second processes in the second process fleet being less than a preset threshold for a quantity of started second processes within predefined time. In this way, a quantity of processes can be flexibly configured, to implement flexible process management, thereby improving resource utilization of a cloud service.

In the cloud service control method according to this disclosure, an application instance is deployed on a cloud server, and server virtual machines and client virtual machines are managed by using independent process fleets, to implement cloud communication and computing of interaction processing and content processing, thereby implementing efficient and convenient deployment and running of the application instance.

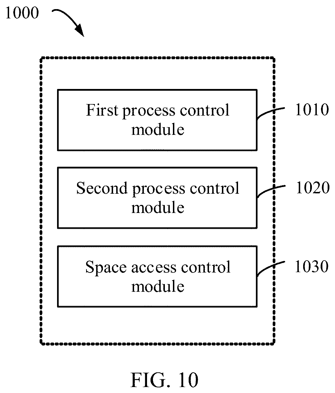

FIG. 10 is a block diagram of a cloud service control apparatus according to some embodiments of this disclosure. In this embodiment of this disclosure, the cloud service control apparatus includes: a first process control module 1010, configured to create a first process fleet, where the first process fleet includes one or more first processes respectively associated with one or more server virtual machines; a second process control module 1020, configured to create a second process fleet, where the second process fleet includes one or more second processes respectively associated with one or more client virtual machines; and a space access control module 1030, configured to configure the first process and the second process for a client that accesses virtual space associated with an application, to control the client to access the virtual space via the client virtual machine associated with the first process and the server virtual machine associated with the second process.

In some embodiments, the space access control module 1030 is further configured to: receive, at the server virtual machine, object information associated with the client from the client via the client virtual machine; send, at the server virtual machine, the object information associated with the client to an interaction processing apparatus, where the interaction processing apparatus determines updated object information for the client based on the object information; and receive the updated object information at the client virtual machine from the interaction processing apparatus via the server virtual machine. In some embodiments, controlling the client to access the virtual space via the client virtual machine and the server virtual machine further includes: sending, at the client virtual machine, the updated object information to the content processing apparatus, so that the content processing apparatus determines updated content information for the client based on the updated object information, and sends the updated content information to the client. In this way, the interaction processing apparatus can synchronize object information for a plurality of clients and servers that access the virtual space, and the content processing apparatus can generate specific presentation content based on synchronized object information for the clients, so that an application developer can implement large-scale multi-user online virtual space access processing without building a dedicated server.

In some embodiments, the first process control module 1010 is further configured to: create a first virtual private cloud based on creating the first process fleet; create the one or more server virtual machines for the first virtual private cloud; and start the one or more server virtual machines to establish a connection with the interaction processing apparatus, where the interaction processing apparatus is configured to process object information from the one or more server virtual machines. In some embodiments, the second process control module 1020 is further configured to: create a second virtual private cloud based on creating the second process fleet; create the one or more client virtual machines for the second virtual private cloud; and start the one or more client virtual machines to establish a connection with the content processing apparatus, where the content processing apparatus is configured to process content information provided to the one or more client virtual machines. In this way, a plurality of server virtual machines and a plurality of client virtual machines are established by using virtual private clouds, so that computing processing for a specific purpose can be implemented, and loosely coupled independent control can be implemented for different functions, thereby flexibly implementing deployment and running of a large-scale multi-user online application instance.

In some embodiments, the first process control module 1010 is further configured to: create, based on a virtual space creation request, the virtual space associated with the first process fleet; determine, for the first process fleet associated with the virtual space, one or more server virtual machines associated with one or more first process fleets of the first process fleet; and send a virtual space creation response including a network address of the server virtual machine, where the virtual space is provided by accessing the network address of the server virtual machine. In some embodiments, the space access control module 1030 is further configured to: determine, based on a virtual space access request from the client, the first process fleet and the second process fleet that are associated with the virtual space to be accessed by the client; configure the first process for the client based on the first process fleet, and configure the second process for the client based on the second process fleet; determine the client virtual machine associated with the second process for the second process; and send a virtual space access response including a network address of the client virtual machine to the client, so that the client accesses the virtual space by accessing the network address of the client virtual machine and through the network address of the server virtual machine. In this way, a main virtual space processing procedure is implemented on the cloud server, so that a user can implement quick access from a client to the virtual space by performing a simple arrangement on the client, thereby effectively improving user experience.

In some embodiments, the space access control module 1030 is further configured to: perform the following operations based on a virtual space disconnection request sent from the client to the network address of the client virtual machine: disconnecting the client virtual machine from the content processing apparatus; stopping the second process associated with the client virtual machine; and disconnecting the client virtual machine from the server virtual machine associated with the second process configured for the client. In this way, a main part of an access and exit procedure is implemented in the cloud service control system, and access exit of the client can be quickly implemented at the client, thereby further effectively improving user experience.

In some embodiments, the space access control module 1030 is further configured to: determine, based on session statuses of the first processes associated with the server virtual machines and session statuses of the second processes associated with the client virtual machines, whether all sessions of the first processes in the first process fleet and all sessions of the second processes in the second process fleet are closed; in response to determining that all the sessions of the first processes in the first process fleet are closed, delete all the first processes in the first process fleet and all the server virtual machines associated with the first processes; and in response to determining that all the sessions of the second processes in the second process fleet are closed, delete all the second processes in the second process fleet and all server virtual machines associated with the second processes. In this way, automatic process management can be implemented based on session statuses proactively reported by virtual machines, and the corresponding virtual machines can be deleted, so that idle resources can be released in time, thereby improving virtual space management efficiency.

In some embodiments, in response to receiving an application deployment, the first process control module 1010 is further configured to create a client image for creating the second process fleet, and the second process control module 1020 is further configured to create a server image for creating the first process fleet, where the application deployment is associated with a third virtual private cloud. The first process control module 1010 is further configured to configure a peering connection between the first virtual private cloud and the third virtual private cloud based on creating the first virtual private cloud associated with the first process fleet, and the second process control module 1020 is further configured to configure a peering connection between the second virtual private cloud and the first virtual private cloud based on creating the second virtual private cloud associated with the second process fleet. In this way, efficient communication and connection between the application deployment apparatus serving as a development-side platform of the application developer and the cloud service system can be implemented, without changing an existing development-side platform architecture of the application developer, thereby implementing efficient and convenient development experience.

In some embodiments, the space access control module 1030 is further configured to: adjust a quantity of startable first processes in the first process fleet in response to a quantity of first processes in the first process fleet meeting a predefined condition; or adjust a quantity of startable second processes in the second process fleet in response to a quantity of second processes in the second process fleet meeting a predefined condition. In some embodiments, the space access control module 1030 is further configured to: increase the quantity of startable first processes in the first process fleet in response to the quantity of first processes in the first process fleet being equal to a preset quantity of startable first processes, and decrease the quantity of startable first processes in the first process fleet in response to the quantity of first processes in the first process fleet being less than a preset threshold for a quantity of started first processes within predefined time; or increase the quantity of startable second processes in the second process fleet in response to the quantity of second processes in the second process fleet being equal to a preset quantity of startable second processes, and decrease the quantity of startable second processes in the second process fleet in response to the quantity of second processes in the second process fleet being less than a preset threshold for a quantity of started second processes within predefined time. In this way, a quantity of processes can be flexibly configured, to implement flexible process management, thereby improving resource utilization of a cloud service.

In the cloud service control apparatus according to this disclosure, an application instance is deployed on a cloud server, and server virtual machines and client virtual machines are managed by using independent process fleets, to implement cloud communication and computing of interaction processing and content processing, thereby implementing efficient and convenient deployment and running of the application instance.

Modules included in the cloud service control system and/or the cloud service control apparatus are used as examples of a software functional unit. The cloud service control system and/or the cloud service control apparatus may include code running on a computing instance. The computing instance may be at least one of computing devices such as a physical host (computing device), a virtual machine, and a container. Further, there may be one or more computing devices. For example, the cloud service control system and/or the cloud service control apparatus may include code running on multiple hosts/virtual machines/containers. It should be noted that the plurality of hosts/virtual machines/containers used to run the application program may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware function unit. The cloud service control system and/or the cloud service control apparatus may include at least one computing device, such as a server. Alternatively, the modules of the cloud service control apparatus may be devices implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

A plurality of computing devices included in the cloud service control system and/or the cloud service control apparatus may be distributed in a same region, or may be distributed in different regions. The plurality of computing devices included in the cloud service control system and/or the cloud service control apparatus may be distributed in a same AZ, or may be distributed in different AZs. Similarly, the plurality of computing devices included in the cloud service control system and/or the cloud service control apparatus may be distributed in a same VPC, or may be distributed in the plurality of VPCs. The plurality of computing devices may be any combination of computing devices such as a server, an ASIC, a PLD, a CPLD, an FPGA, and GAL.

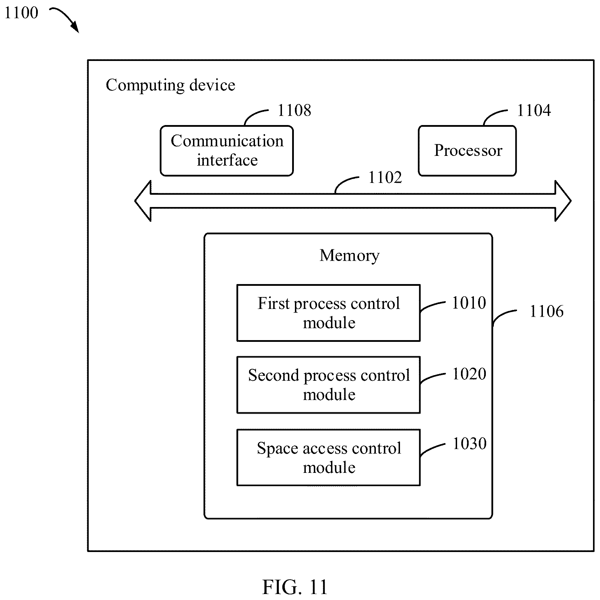

An embodiment of this disclosure further provides a computing device 1100. FIG. 11 is a block diagram of an example device that may be used to implement an example implementation of this disclosure. As shown in FIG. 11, the computing device 1100 includes a bus 1102, a processor 1104, a memory 1106, and a communication interface 1108. The processor 1104, the memory 1106, and the communication interface 1108 communicate with each other through the bus 1102 The computing device 1100 may be a server or a terminal device. It should be understood that quantities of processors and memories in the computing device 1100 are not limited in this application. The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1104 may include a path for transmitting information between various components (for example, the memory 1106, the processor 1104, the communication interface 1108) of the computing device 1100. The processor 1104 may include any one or more of processors, such as a central processing unit (central processing unit, CPU), a graphics processing unit (graphics processing unit, GPU), a microprocessor (microprocessor, MP), or a digital signal processor (digital signal processor, DSP). The memory 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1106 stores executable program code, and the processor 1104 executes the executable program code to separately implement all or a part of components or steps of the cloud service control system 10, the cloud service control apparatus 1000, and the cloud service control method in the foregoing embodiments of this disclosure. That is, the memory 1106 may store instructions for the method and the function in any one of the foregoing embodiments. The communication interface 1108 uses a transceiver module, for example, but not limited to, a network interface card or a transceiver, to implement communication between the computing device 1100 and another device or a communication network.

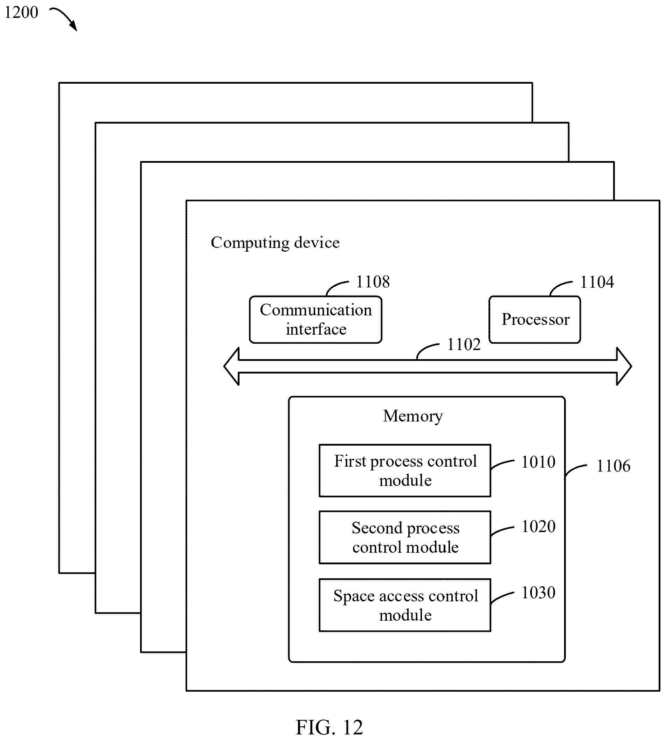

An embodiment of this disclosure further provides a computing device cluster 1200. FIG. 12 is a block diagram of an example device cluster that may be used to implement an example implementation of this disclosure. The cloud service control system in embodiments of this disclosure is deployed on the computing device cluster 1200, and the computing device cluster 1200 includes at least one computing device 1100. In some embodiments, the computing device cluster 1200 may include one computing device 1100 to implement all or a part of the cloud service control system in embodiments of this disclosure. In some embodiments, the computing device cluster 1200 may include a plurality of computing devices 1100, and the plurality of computing devices may implement all or a part of the cloud service control system in embodiments of this disclosure synchronously or asynchronously, serially or in parallel, or independently or distributedly. The computing device 1100 in the computing device cluster 1200 may be a server, for example, a central server, an edge server, or a local server in a local data center. In some embodiments, the computing device may alternatively be a terminal device, for example, a desktop computer, a notebook computer, or a smartphone. As shown in FIG. 12, the computing device cluster 1200 includes at least one computing device 1100. The memories 1106 in one or more computing devices 1100 in the computing device cluster 1200 may store same instructions used to perform the method and the function in any one of the foregoing embodiments. In some possible implementations, the memories 1106 of the one or more computing devices 1100 in the computing device cluster 1200 may alternatively separately store a part of instructions used to perform the method and the function in embodiments of this disclosure in any one of the foregoing embodiments. In other words, a combination of the one or more computing devices 1100 may jointly execute instructions for the method and the function in embodiments of this disclosure. It should be noted that memories 1106 in different computing devices 1100 in the computing device cluster may store different instructions, and the different instructions are separately used to perform a part of functions of the apparatus 1100. That is, instructions stored in the memories 1106 in different computing devices 1100 may implement functions of one or more modules or submodules of the first process control module 1010, the second process control module 1020, and the space access control module 1030.

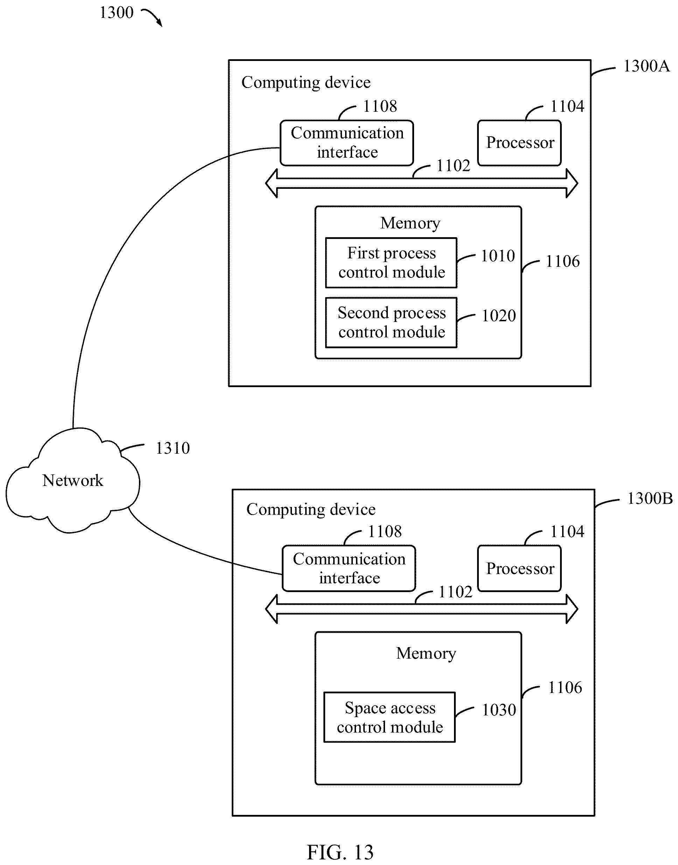

In some possible implementations, one or more computing devices in the computing device cluster may be connected through a network. The network may be a wide area network, a local area network, or the like. FIG. 13 is a block diagram of another example device that may be used to implement an example implementation of this disclosure, where a possible implementation 1300 is shown. As shown in FIG. 13, two computing devices 1100A and 1100B are connected through a network 1310. For a connection manner between computing device clusters shown in FIG. 13, it may be considered that in the method in this application, a large amount of user data needs to be stored, and intensive real-time or near-real-time computing needs to be performed, and therefore, a part of functions are considered to be performed by the computing device 1100B. It should be understood that functions of the computing device 1100A shown in FIG. 13 may alternatively be completed by a plurality of computing devices 1100. Similarly, functions of the computing device 1100B may also be implemented by a plurality of computing devices 1100.

An embodiment of this disclosure further provides a computer program product including instructions. The computer program product may be software or a program product that includes instructions and that can run on a computing device or that can be stored in any usable medium. When the computer program product runs on at least one computing device, the at least one computing device is enabled to perform the method and the function in any one of the foregoing embodiments.

An embodiment of this disclosure further provides a computer-readable storage medium. The computer-readable storage medium may be any usable medium accessible by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state disk), or the like. The computer-readable storage medium includes instructions, and the instructions indicate the computing device to perform the method and the function in any one of the foregoing embodiments.

Usually, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code for implementing the method in this disclosure may be written in one or more programming languages. The computer program code may be provided for a processor of a general-purpose computer, a special-purpose computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device, or a data storage device like a data center, including one or more usable media. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

The foregoing has described various implementations of this disclosure. The foregoing descriptions are examples, are not exhaustive, and are not limited to the disclosed implementations. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention. Many modifications and changes are clear to persons of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A cloud service control system, comprising:
a service control apparatus, configured to: create a first process fleet and a second process fleet for an application, and configure a first process in the first process fleet and a second process in the second process fleet for a client that accesses virtual space associated with the application;
an interaction processing apparatus, configured to process object information from one or more server virtual machines respectively associated with one or more first processes in the first process fleet; and
a content processing apparatus, configured to process content information provided to one or more client virtual machines respectively associated with one or more second processes in the second process fleet, wherein
the service control apparatus controls the client to access the virtual space via a client virtual machine associated with the first process and a server virtual machine associated with the second process.

2. The cloud service control system according to claim 1, wherein
object information that is associated with the client and that is sent by the client via the client virtual machine is received at the server virtual machine;
the server virtual machine sends the object information associated with the client to the interaction processing apparatus; and
the interaction processing apparatus determines updated object information for the client based on the object information, and sends the updated object information to the client virtual machine via the server virtual machine.

3. The cloud service control system according to claim 2, wherein
the client virtual machine sends the updated object information to the content processing apparatus; and
the content processing apparatus determines updated content information for the client based on the updated object information, and sends the updated content information to the client.

4. The cloud service control system according to claim 1, wherein the service control apparatus is further configured to:
create a first virtual private cloud based on creating the first process fleet;
create the one or more server virtual machines for the first virtual private cloud; and
start the one or more server virtual machines to establish a connection with the interaction processing apparatus.

5. The cloud service control system according to claim 1, wherein the service control apparatus is further configured to:
create a second virtual private cloud based on creating the second process fleet;
create the one or more client virtual machines for the second virtual private cloud; and
start the one or more client virtual machines to establish a connection with the content processing apparatus.

6. The cloud service control system according to claim 1, wherein
the service control apparatus creates, based on a virtual space creation request, the virtual space associated with the first process fleet;
the service control apparatus determines, for the first process fleet associated with the virtual space, one or more server virtual machines associated with one or more first process fleets of the first process fleet;
the service control apparatus sends a virtual space creation response comprising a network address of the server virtual machine; and
the client accesses the virtual space by accessing the network address of the server virtual machine via the client virtual machine.

7. The cloud service control system according to claim 6, wherein the service control apparatus is further configured to:
determine, based on a virtual space access request from the client, the first process fleet and the second process fleet that are associated with the virtual space to be accessed by the client;
configure the first process for the client based on the first process fleet, and configure the second process for the client based on the second process fleet;
determine the client virtual machine associated with the second process for the second process; and
send a virtual space access response comprising a network address of the client virtual machine to the client, wherein
the client accesses the virtual space by accessing the network address of the client virtual machine and through the network address of the server virtual machine.

8. The cloud service control system according to claim 7, wherein
the client sends a virtual space disconnection request to the network address of the client virtual machine; and
the client virtual machine performs the following operations based on the virtual space disconnection request:
disconnecting the client virtual machine from the content processing apparatus;
stopping the second process associated with the client virtual machine; and
disconnecting the client virtual machine from the server virtual machine associated with the second process configured for the client.

9. The cloud service control system according to any one of claims 1 to 8, wherein
the server virtual machines send session statuses of the first processes associated with the server virtual machines to the service control apparatus;
the client virtual machines send session statuses of the second processes associated with the client virtual machines to the service control apparatus;
the service control apparatus determines, based on the session statuses of the first processes and the session statuses of the second processes, whether all sessions of the first processes in the first process fleet and all sessions of the second processes in the second process fleet are closed;
in response to determining that all the sessions of the first processes in the first process fleet are closed, the service control apparatus deletes all the first processes in the first process fleet and all the server virtual machines associated with the first processes; and
in response to determining that all the sessions of the second processes in the second process fleet are closed, the service control apparatus deletes all the second processes in the second process fleet and all server virtual machines associated with the second processes.

10. The cloud service control system according to any one of claims 1 to 8, wherein the cloud service control system further comprises:
an application deployment apparatus, wherein the application deployment apparatus is configured to send a request for an application deployment to the service control apparatus in response to application uploading; and
the service control apparatus is configured to:
in response to receiving the request for the application deployment from the application deployment apparatus, create a client image for creating the second process fleet and a server image for creating the first process fleet, wherein the application deployment is associated with a third virtual private cloud;
configure a peering connection between the first virtual private cloud and the third virtual private cloud based on creating the first virtual private cloud associated with the first process fleet; and
configure a peering connection between the second virtual private cloud and the first virtual private cloud based on creating the second virtual private cloud associated with the second process fleet.

11. The cloud service control system according to any one of claims 1 to 8, wherein the service control apparatus is further configured to perform at least one of the following:
adjusting a quantity of startable first processes in the first process fleet in response to a quantity of first processes in the first process fleet meeting a predefined condition; or
adjusting a quantity of startable second processes in the second process fleet in response to a quantity of second processes in the second process fleet meeting a predefined condition.

12. The cloud service control system according to claim 11, wherein the service control apparatus is further configured to perform at least one of the following:
increasing the quantity of startable first processes in the first process fleet in response to the quantity of first processes in the first process fleet being equal to a preset quantity of startable first processes, and decreasing the quantity of startable first processes in the first process fleet in response to the quantity of first processes in the first process fleet being less than a preset threshold for a quantity of started first processes within predefined time; or
increasing the quantity of startable second processes in the second process fleet in response to the quantity of second processes in the second process fleet being equal to a preset quantity of startable second processes, and decreasing the quantity of startable second processes in the second process fleet in response to the quantity of second processes in the second process fleet being less than a preset threshold for a quantity of started second processes within predefined time.

13. A cloud service control method, comprising:
creating a first process fleet and a second process fleet for an application, wherein the first process fleet comprises one or more first processes respectively associated with one or more server virtual machines, and the second process fleet comprises one or more second processes respectively associated with one or more client virtual machines; and
configuring the first process and the second process for a client that accesses virtual space associated with the application, to control the client to access the virtual space via the client virtual machine associated with the first process and the server virtual machine associated with the second process.

14. The cloud service control method according to claim 13, wherein controlling the client to access the virtual space via the client virtual machine and the server virtual machine comprises:
receiving, at the server virtual machine, object information associated with the client from the client via the client virtual machine;
sending, at the server virtual machine, the object information associated with the client to an interaction processing apparatus, wherein the interaction processing apparatus determines updated object information for the client based on the object information; and
receiving, at the client virtual machine, the updated object information from the interaction processing apparatus via the server virtual machine.

15. The cloud service control method according to claim 14, wherein controlling the client to access the virtual space via the client virtual machine and the server virtual machine further comprises:
sending, at the client virtual machine, the updated object information to a content processing apparatus, so that the content processing apparatus determines updated content information for the client based on the updated object information, and sends the updated content information to the client.

16. The cloud service control method according to claim 13, wherein creating the first process fleet comprises:
creating a first virtual private cloud based on creating the first process fleet;
creating the one or more server virtual machines for the first virtual private cloud; and
starting the one or more server virtual machines to establish a connection with an interaction processing apparatus, wherein the interaction processing apparatus is configured to process object information from the one or more server virtual machines.

17. The cloud service control method according to claim 13, wherein creating the second process fleet comprises:
creating a second virtual private cloud based on creating the second process fleet;
creating the one or more client virtual machines for the second virtual private cloud; and
starting the one or more client virtual machines to establish a connection with a content processing apparatus, wherein the content processing apparatus is configured to process content information provided to the one or more client virtual machines.

18. The cloud service control method according to claim 13, further comprising:
creating, based on a virtual space creation request, the virtual space associated with the first process fleet;
determining, for the first process fleet associated with the virtual space, one or more server virtual machines associated with one or more first process fleets of the first process fleet; and
sending a virtual space creation response comprising a network address of the server virtual machine, wherein the virtual space is provided by accessing the network address of the server virtual machine.

19. The cloud service control method according to claim 18, wherein configuring the first process and the second process for the client further comprises:
determining, based on a virtual space access request from the client, the first process fleet and the second process fleet that are associated with the virtual space to be accessed by the client;
configuring the first process for the client based on the first process fleet, and configuring the second process for the client based on the second process fleet;
determining the client virtual machine associated with the second process for the second process; and
sending a virtual space access response comprising a network address of the client virtual machine to the client, so that the client accesses the virtual space by accessing the network address of the client virtual machine and through the network address of the server virtual machine.

20. The cloud service control method according to claim 19, further comprising:
performing the following operations based on a virtual space disconnection request sent from the client to the network address of the client virtual machine:
disconnecting the client virtual machine from the content processing apparatus;
stopping the second process associated with the client virtual machine; and
disconnecting the client virtual machine from the server virtual machine associated with the second process configured for the client.

21. The cloud service control method according to any one of claims 13 to 20, further comprising:
determining, based on session statuses of the first processes associated with the server virtual machines and session statuses of the second processes associated with the client virtual machines, whether all sessions of the first processes in the first process fleet and all sessions of the second processes in the second process fleet are closed;
in response to determining that all the sessions of the first processes in the first process fleet are closed, deleting all the first processes in the first process fleet and all the server virtual machines associated with the first processes; and
in response to determining that all the sessions of the second processes in the second process fleet are closed, deleting all the second processes in the second process fleet and all server virtual machines associated with the second processes.

22. The cloud service control method according to any one of claims 13 to 20, further comprising:
in response to receiving an application deployment, creating a client image for creating the second process fleet and a server image for creating the first process fleet, wherein the application deployment is associated with a third virtual private cloud;
configuring a peering connection between the first virtual private cloud and the third virtual private cloud based on creating the first virtual private cloud associated with the first process fleet; and
configuring a peering connection between the second virtual private cloud and the first virtual private cloud based on creating the second virtual private cloud associated with the second process fleet.

23. The cloud service control method according to any one of claims 13 to 20, further comprising at least one of the following:
adjusting a quantity of startable first processes in the first process fleet in response to a quantity of first processes in the first process fleet meeting a predefined condition; or
adjusting a quantity of startable second processes in the second process fleet in response to a quantity of second processes in the second process fleet meeting a predefined condition.

24. The cloud service control method according to claim 23, further comprising at least one of the following:
increasing the quantity of startable first processes in the first process fleet in response to the quantity of first processes in the first process fleet being equal to a preset quantity of startable first processes, and decreasing the quantity of startable first processes in the first process fleet in response to the quantity of first processes in the first process fleet being less than a preset threshold for a quantity of started first processes within predefined time; or
increasing the quantity of startable second processes in the second process fleet in response to the quantity of second processes in the second process fleet being equal to a preset quantity of startable second processes, and decreasing the quantity of startable second processes in the second process fleet in response to the quantity of second processes in the second process fleet being less than a preset threshold for a quantity of started second processes within predefined time.

25. A cloud service control apparatus, comprising:
a first process control module, configured to create a first process fleet, wherein the first process fleet comprises one or more first processes respectively associated with one or more server virtual machines;
a second process control module, configured to create a second process fleet, wherein the second process fleet comprises one or more second processes respectively associated with one or more client virtual machines; and
a space access control module, configured to configure the first process and the second process for a client that accesses virtual space associated with an application, to control the client to access the virtual space via the client virtual machine associated with the first process and the server virtual machine associated with the second process.

26. A computing device cluster, comprising at least one computing device, wherein each computing device comprises a processor and a memory, and the processor of the at least one computing device is configured to execute instructions stored in the memory of the at least one computing device, to enable the computing device cluster to implement the system according to any one of claims 1 to 12.

27. A computing device cluster, comprising at least one computing device, wherein each computing device comprises a processor and a memory, and the processor of the at least one computing device is configured to execute instructions stored in the memory of the at least one computing device, to enable the computing device cluster to perform the method according to any one of claims 13 to 24.

28. A computer program product comprising instructions, wherein when the instructions are run by a computing device cluster, the computing device cluster is enabled to implement the system according to any one of claims 1 to 12.

29. A computer program product comprising instructions, wherein when the instructions are run by a computing device cluster, the computing device cluster is enabled to perform the method according to any one of claims 13 to 24.

30. A computer-readable storage medium, comprising computer program instructions, wherein when the computer program instructions are executed by a computing device cluster, the computing device cluster implements the system according to any one of claims 1 to 12.

31. A computer-readable storage medium, comprising computer program instructions, wherein when the computer program instructions are executed by a computing device cluster, the computing device cluster performs the method according to any one of claims 13 to 24.
